# EUROPEAN PATENT APPLICATION

(11) **EP 4 745 017 A1**
(43) Date of publication of application: **20.05.2026**
(21) Application number: 24844816.9
(22) Date of filing: 24.07.2024
(51) Int. Cl.: B62K 15/00

(54) **ELECTRIC VEHICLE**

(30) Priority: 24.07.2023 CN 202321953430 U; 24.07.2023 CN 202321953429 U; 24.07.2023 CN 202310911155; 24.07.2023 CN 202310911210; 24.07.2023 CN 202310911028; 24.07.2023 CN 202310910850; 24.07.2023 CN 202310910591; 24.07.2023 CN 202310923254
(71) Applicant: Shenzhen Chitado Technology Co., Ltd, Shenzhen, Guangdong 518000 (CN)
(72) Inventor: ZHANG, Dianxuan, Shenzhen, 518000 (CN); ZHOU, Dengjin, Shenzhen, 518000 (CN); ZHOU, Dengbing, Shenzhen, 518000 (CN); ZENG, Huihai, Shenzhen, Guangdong 518000 (CN)
(74) Representative: Santarelli
(86) International application number: PCT/CN2024/107387
(87) International publication number: WO 2025/021126

(57) **Abstract**

An electric vehicle includes a first foot platform and a second foot platform rotatably connected to the first foot platform, each having a foot support surface. A wheel assembly positioned between the first and second foot platforms includes a wheel and a motor positioned within the wheel. A battery assembly supplies power to the electric vehicle. The electric vehicle is configured to transition between an unfolded state and a folded state. In the unfolded state, the foot support surfaces are oriented to be respectively stepped on by a user's first foot and second foot, and in the folded state the first and second foot platforms are closer to each other than in the unfolded state. When the electric vehicle is riderless and in the unfolded state on a horizontal ground, one of the first and second foot platforms is closer to the ground than the other to facilitate mounting.

## Description

### CROSS-REFERENCE TO RELATED APPLICATIONS

This application claims priority to Chinese Patent Application Nos. 202310923254.X, 202310910591.5, 202310910850.4, 202310911210.5, 202310911028.X, 202310911155.X, 202321953429.3, and 202321953430.6, filed with the China National Intellectual Property Administration on July 24, 2023, the entire contents of which are incorporated herein by reference.

### Technical Field

Embodiments of the present disclosure relate generally to the technical field of electric transportation devices, and more particularly, to an electric vehicle.

### Background of the Invention

A one-wheel self-balancing vehicle is an innovative electric vehicle, primarily consisting of a large wheel and foot pedals. Its working principle is based on gyroscopes and accelerometers, maintaining balance by detecting changes in a rider's center of gravity. A user stands on the pedals and controls forward and backward movement of the vehicle by leaning their body forward and backward.

This type of balancing vehicle possesses extremely high portability and flexibility, making it suitable for short-distance commuting in urban environments, as well as for leisure and entertainment in parks and open spaces. The one-wheel self-balancing vehicle has a built-in motor and battery pack, providing strong power and long endurance. Some high-end models are also equipped with intelligent applications (APPs), capable of monitoring data such as speed, battery level, and mileage.

The one-wheel self-balancing vehicle is not only environmentally friendly but also easy to operate, making it suitable for users of various age groups. It serves not only as a daily transportation tool but also allows for the performance of extreme sports, such as trick riding and obstacle crossing, and is deeply loved by young people and technology enthusiasts. Due to its unique design and excellent handling experience, the one-wheel self-balancing vehicle is gradually becoming a part of modern urban life.

### Summary of the Invention

Embodiments of the present disclosure provide an electric vehicle, which can include: a first foot platform and a second foot platform rotatably connected to the first foot platform, each of the first foot platform and the second foot platform having a foot support surface; a wheel assembly including a wheel and a motor positioned within the wheel; a battery assembly configured to supply power to the electric vehicle; at least one sensor configured to sense an attitude of at least one of the first foot platform and the second foot platform and generate a corresponding attitude signal; and at least one controller in communication with the motor and the at least one sensor, the at least one controller being configured to control the motor based on the attitude signal to drive the wheel.

The electric vehicle is configured to transition between an unfolded state and a folded state. In the unfolded state, the wheel assembly is positioned between the first foot platform and the second foot platform, and the foot support surface of the first foot platform and the foot support surface of the second foot platform are oriented to be respectively stepped on by a user's first foot and second foot. In the folded state, the first foot platform and the second foot platform are closer to each other than when in the unfolded state. Further, when an external force applied to the electric vehicle in the unfolded state on a horizontal ground to maintain the foot support surface of the first foot platform and the foot support surface of the second foot platform substantially parallel to the horizontal ground is removed, one of the first foot platform and the second foot platform is configured to rotate in a first direction toward the horizontal ground, and the other of the first foot platform and the second foot platform is configured to rotate in a second direction opposite the first direction away from the horizontal ground.

When the electric vehicle is in the unfolded state on the horizontal ground without a rider, one of the first foot platform and the second foot platform can rotate in the first direction toward the horizontal ground, and the other can rotate in the second direction away from the horizontal ground. In other words, in the absence of the external force, one of the first foot platform and the second foot platform is closer to the horizontal ground than the other, which can indicate an initial stepping point for a user. Accordingly, the user can first step onto the foot platform that is closer to the horizontal ground and then step onto the other foot platform, thereby improving the user's mounting experience because the user can more readily determine which foot platform to step onto first and can conveniently perform a mounting action.

In addition, the present disclosure also relates to an electric vehicle that can include: a first foot platform and a second foot platform rotatably connected to the first foot platform, each of the first foot platform and the second foot platform having a foot support surface; a wheel assembly including a wheel and a motor positioned within the wheel; a battery assembly configured to supply power to the electric vehicle; at least one sensor configured to sense an attitude of at least one of the first foot platform and the second foot platform and generate a corresponding attitude signal; and at least one controller in communication with the motor and the at least one sensor, the at least one controller being configured to control the motor based on the attitude signal to drive the wheel. The electric vehicle is configured to transition between an unfolded state and a folded state. In the unfolded state, the wheel assembly is positioned between the first foot platform and the second foot platform, and the foot support surface of the first foot platform and the foot support surface of the second foot platform are oriented to be respectively stepped on by a user's first foot and second foot. In the folded state, the first foot platform and the second foot platform are closer to each other than when in the unfolded state. Further, an overall weight of the first foot platform and an overall weight of the second foot platform are different.

Accordingly, when the electric vehicle is in the unfolded state on the horizontal ground without a rider, the foot platform having the greater overall weight can naturally tilt downward, so that the user can first step onto the foot platform that is closer to the horizontal ground after tilting and then step onto the other foot platform, thereby improving the user's mounting experience because the user can more readily determine which foot platform to step onto first and can conveniently perform a mounting action.

In addition, the present disclosure further relates to an electric vehicle that can include: a first foot platform and a second foot platform fixedly connected to each other, the first foot platform and the second foot platform being oriented to be respectively stepped on by a user's first foot and second foot; a wheel assembly positioned between the first foot platform and the second foot platform, the wheel assembly including a wheel and a motor positioned within the wheel; a battery assembly configured to supply power to the electric vehicle; at least one sensor configured to sense an attitude of at least one of the first foot platform and the second foot platform and generate a corresponding attitude signal; and at least one controller in communication with the motor and the at least one sensor, the at least one controller being configured to control the motor based on the attitude signal to drive the wheel; wherein an overall weight of the first foot platform and an overall weight of the second foot platform are different.

Accordingly, when the electric vehicle is on the horizontal ground without a rider, the foot platform having the greater overall weight can naturally tilt downward, so that the user can first step onto the foot platform that is closer to the horizontal ground after tilting and then step onto the other foot platform, thereby improving the user's mounting experience because the user can more readily determine which foot platform to step onto first and can conveniently perform a mounting action.

In addition, the present disclosure also relates to an electric vehicle that can include: a first foot platform and a second foot platform rotatably connected to the first foot platform, each of the first foot platform and the second foot platform having a foot support surface; a wheel assembly including a wheel and a motor positioned within the wheel; a battery assembly configured to supply power to the electric vehicle; at least one sensor configured to sense an attitude of at least one of the first foot platform and the second foot platform and generate a corresponding attitude signal; and at least one controller in communication with the motor and the at least one sensor, the at least one controller being configured to control the motor based on the attitude signal to drive the wheel. The electric vehicle is configured to transition between an unfolded state and a folded state. In the unfolded state, the wheel assembly is positioned between the first foot platform and the second foot platform, and the foot support surface of the first foot platform and the foot support surface of the second foot platform are oriented to be respectively stepped on by a user's first foot and second foot. In the folded state, the first foot platform and the second foot platform are closer to each other than when in the unfolded state. Further, when an external force applied to the electric vehicle in the unfolded state on a horizontal ground to maintain the foot support surface of the first foot platform and the foot support surface of the second foot platform substantially parallel to the horizontal ground is removed, one of the first foot platform and the second foot platform is configured to tilt in a first direction until contacting the horizontal ground, and the other of the first foot platform and the second foot platform is configured to tilt in a second direction opposite the first direction away from the horizontal ground.

Accordingly, when the electric vehicle is in the unfolded state on the horizontal ground without a rider, the foot platform having the greater overall weight can naturally tilt downward until contacting the horizontal ground, so that the user can first step onto the foot platform that has tilted to contact the horizontal ground and then step onto the other foot platform, thereby improving the user's mounting experience because the user can more readily determine which foot platform to step onto first and can conveniently perform a mounting action.

### Brief Description of the Drawings

To describe the technical solutions in the embodiments of the present disclosure more clearly, the following briefly introduces the accompanying drawings required for describing the embodiments. Apparently, the accompanying drawings in the following description show merely some embodiments of the present disclosure, and those of ordinary skill in the art may still derive other drawings from these accompanying drawings without creative efforts.
FIG. 1 is a schematic diagram of an electric vehicle in an unfolded state according to an embodiment of the present disclosure.
FIG. 2 is a schematic diagram of an electric vehicle in a folded state according to an embodiment of the present disclosure.
FIG. 3 is a schematic diagram of an electric vehicle in yet another folded state according to an embodiment of the present disclosure.
FIG. 4 is a side view of an electric vehicle according to an embodiment of the present disclosure, in which a first foot platform and a second foot platform are not rotatable relative to each other.
FIG. 5 is a schematic exploded view of an electric vehicle according to an embodiment of the present disclosure.
FIG. 6 is a side view of an electric vehicle according to an embodiment of the present disclosure, wherein the electric vehicle is in an unfolded state and is arranged in a tilted manner relative to a ground surface.
FIG. 7 is a side view of an electric vehicle according to an embodiment of the present disclosure, wherein the electric vehicle is in an unfolded state and is arranged in a tilted manner relative to a ground surface, which may be considered as a state where a rider is about to perform a mounting operation.
FIG. 8 is another side view of an electric vehicle according to an embodiment of the present disclosure, wherein the electric vehicle is in an unfolded state and is substantially parallel to a ground surface, which may be considered as the electric vehicle during traveling.
FIG. 9 is yet another side view of an electric vehicle according to an embodiment of the present disclosure.
FIG. 10 is a perspective cross-sectional view of an electric vehicle according to an embodiment of the present disclosure.
FIG. 11 is a schematic diagram of internal structures of a first foot platform and a second foot platform of an electric vehicle according to an embodiment of the present disclosure.
FIG. 12 is a top view of the electric vehicle in the embodiment shown in FIG. 11.
FIG. 13 is a schematic partial exploded view of an electric vehicle according to an embodiment of the present disclosure.
FIG. 14 is another schematic partial exploded view of an electric vehicle according to an embodiment of the present disclosure.
FIG. 15 is a schematic structural diagram of a wheel assembly and a mounting assembly according to an embodiment of the present disclosure.
FIG. 16 is a side view of a wheel assembly and a mounting assembly according to an embodiment of the present disclosure.
FIG. 17 is a side view of a mounting carrier according to an embodiment of the present disclosure.
FIG. 18 is one exploded view of a connecting arm assembly according to an embodiment of the present disclosure.
FIG. 19 is another exploded view of a connecting arm assembly according to an embodiment of the present disclosure.
FIG. 20 is an exploded view of a second locking member and a fixed plate according to an embodiment of the present disclosure.
FIG. 21 is a schematic structural diagram of an electric vehicle in a folded state according to an embodiment of the present disclosure.
FIG. 22 is a schematic diagram of a cable management box according to an embodiment of the present disclosure.
FIG. 23 is a schematic structural diagram of a support plate according to an embodiment of the present disclosure.
FIG. 24 is a schematic diagram of various electrical components of an electric vehicle.
FIG. 25 is a flowchart of an initialization procedure for electrical components.
FIG. 26 is a flowchart of executing diagnosis in an initialization procedure for electrical components.
FIG. 27 is a flowchart of a control procedure for electrical components.
FIG. 28 is a flowchart of a fault detection procedure for electrical components.

### LIST OF REFERENCE NUMERALS

10. electric vehicle; 100. first foot platform; 101. foot support surface;
200. second foot platform; 201. handle portion; 202. charging port;
300. wheel assembly; 310. wheel; 320. motor; 321. motor shaft; 330. support plate; 331. fixing portion; 332. support surface;
400. battery assembly; 410. battery;
510. sensor; 520. controller ; 530. rider presence sensor; 540. circuit board; 541. power control module; 542. motor drive module; 543. switch detection module; 544. LED drive module; 545. battery management system; 546. power management system; 547. power switch; 550. Hall sensor; 560. motor temperature sensor; 570. indicator light; 580. Bluetooth module; 590. music module;
600. connecting arm assembly; 610. first connecting arm; 611. abutment portion; 612. first shaft hole; 620. second connecting arm; 621. through hole; 622. second shaft hole; 623. mounting plate; 624. through hole; 630. pivot; 640. first locking member; 650. second locking member; 651. fixed post; 652. spring; 653. spring-biased locking member; 6531. connection portion; 6532. limiting plate; 6533. pin portion;
700. mounting assembly; 710. mounting bracket; 711. mounting hole; 711a. first hole portion; 711b. second hole portion; 712. fixing portion; 720. fastener assembly; 721. nut; 722. wedge-shaped fixing block;
810. first cable; 820. second cable; 830. cable housing; 831. accommodating space; 832. wire passing hole;
900. fender; 910. partial fender portion;
G. ground surface; A. longitudinal axis; B. transverse axis; C. tilt angle; D1. first direction; D2. second direction; D3. clockwise; D4. counter-clockwise; F1. first foot; F2. second foot.

### Detailed Description of Embodiments

To make the objectives, features, and advantages of the present disclosure clearer and easier to understand, the specific embodiments of the present disclosure are described in detail below with reference to the accompanying drawings. Numerous specific details are set forth in the following description to facilitate a thorough understanding of the present disclosure. However, the present disclosure can be implemented in many other similar or equivalent ways different from those described herein, and those skilled in the art can make similar modifications without departing from the inventive concept of the present disclosure. Therefore, the present disclosure, and particularly the scope of the claims, is not limited to the specific embodiments disclosed below.

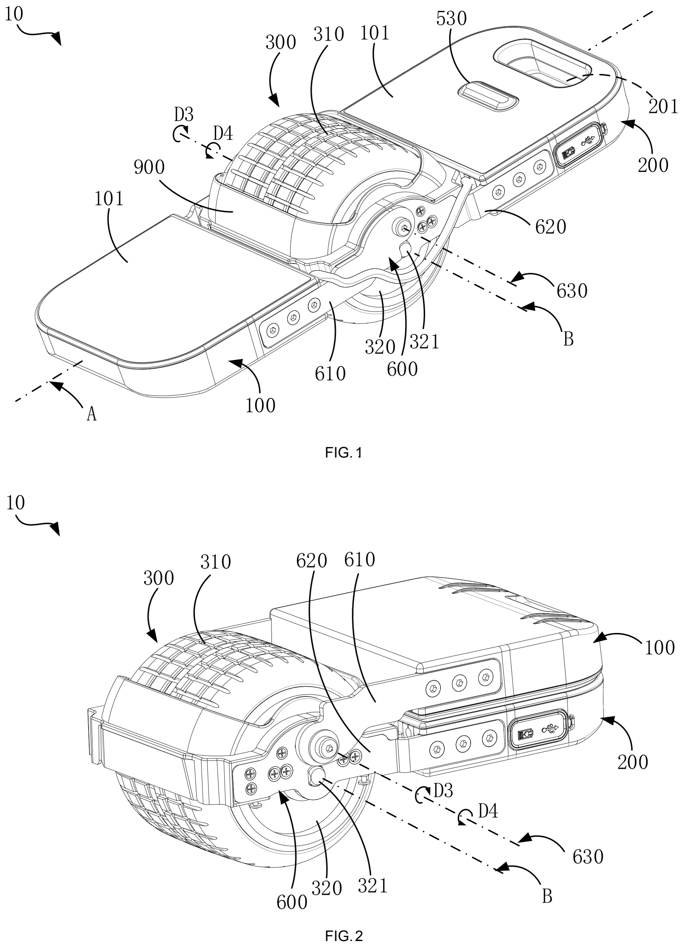

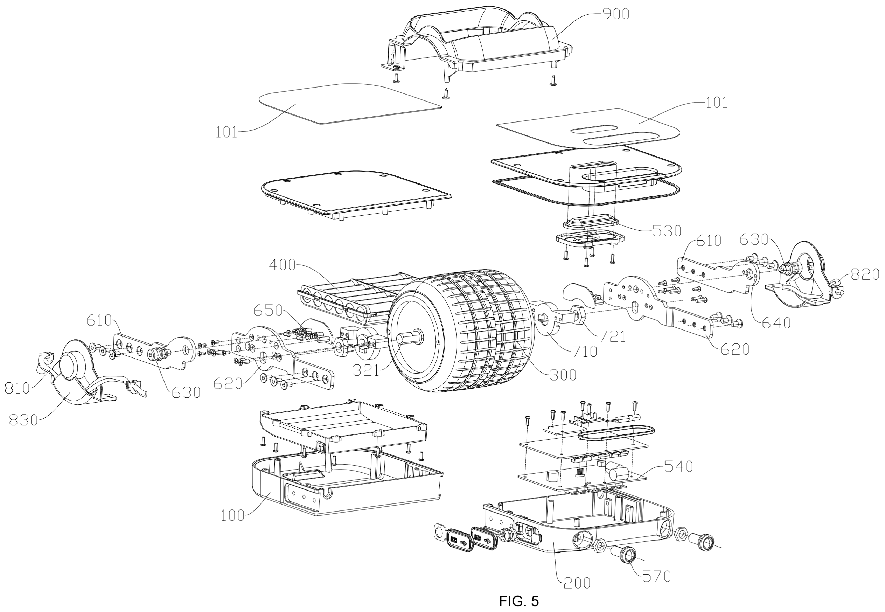

Referring to FIGS. 1 to 12, in some embodiments, the present disclosure provides an electric vehicle 10. More specific names for the electric vehicle 10 involved in this embodiment may also include a one-wheel self-balancing skateboard, a balancing scooter, an Electric skateboard, and the like.

The electric vehicle 10 may include a first foot platform 100, a second foot platform 200, a wheel assembly 300, a battery assembly 400 for supplying energy to the electric vehicle 10, a sensor 510, and a controller 520. The type of the controller 520 is not particularly limited; typically, it is located on a circuit board 540 built into the electric vehicle 10. The controller 520 is generally a Microcontroller Unit (MCU) (which may integrate a processor/CPU, a memory, a timer/counter, various I/O circuits, etc.), also referred to as a microcontroller. It may be replaced by devices or electronic control circuits such as a Complex Programmable Logic Device (CPLD), a Field Programmable Gate Array (FPGA), or a suitable combination of these devices/electronic control circuits to similarly perform control functions for the electric vehicle 10. Specifically, these control functions refer to, for example, receiving attitude data regarding the electric vehicle 10 sensed by relevant sensors, and generating drive signals for a wheel motor of the electric vehicle 10 based on the attitude data.

In addition, the type of the aforementioned sensor 510 is also not particularly limited, as long as it can be used to measure changes in the attitude, orientation, tilt state, or position of the foot platforms. Generally, it is also mounted together with the aforementioned controller 520 on the circuit board 540 built into the electric vehicle 10. The sensor 510 may generally be an Inertial Measurement Unit (IMU). Preferably, the sensor 510 is generally a six-axis gyroscope, which may integrate a 3-axis gyroscope sensor (referred to as a gyroscope) and a 3-axis accelerometer sensor (referred to as an accelerometer).

The wheel assembly 300 may include a wheel 310 and a motor 320 positioned within the wheel 310. In some examples, the wheel assembly 300 may also be referred to as a hub motor, meaning that the wheel 310 and the motor 320 driving the wheel are assembled together to form a relatively independent unit, which facilitates sales, transportation, product design, and assembly. The sensor 510 may be configured to sense an attitude (e.g., tilt angle data) of at least one of the first foot platform 100 and the second foot platform 200 and generate a corresponding attitude signal. The controller 520 may be communicatively connected to the motor 320 and the sensor 510, and configured to control the motor 320 based on the aforementioned attitude signal to drive the wheel 310.

Additionally, a width of the wheel 310 may be greater than or equal to half of a width of the first foot platform 100 or the second foot platform 200. In this way, the movement of the electric vehicle 10 is more stable, especially for users with weak self-balancing capabilities or a poor sense of balance.

In this embodiment, one sensor 510 is provided. Since the electric vehicle 10 is in the unfolded state when a user rides the electric vehicle 10, the attitudes of the first foot platform 100 and the second foot platform 200 change simultaneously and with the same magnitude during the riding process. Therefore, in this embodiment, providing only one sensor 510 can satisfy the requirement for sensing the attitudes of the first foot platform 100 and the second foot platform 200, thereby saving production costs.

In this embodiment, one controller 520 is provided. The single controller 520 receives the attitude signal sent by the sensor 510 to control the motor 320 to drive the wheel 310. This satisfies the control requirements of the electric vehicle 10 and also saves production costs.

In other embodiments, the number of the sensors may be two or more, and the number of the controllers may be two or more.

Specifically, in some embodiments, the electric vehicle 10 may be configured to transition between an unfolded state as shown in FIG. 1 and a folded state as shown in FIG. 2, so as to allow a user to ride the electric vehicle 10 or to facilitate storage of the electric vehicle 10.

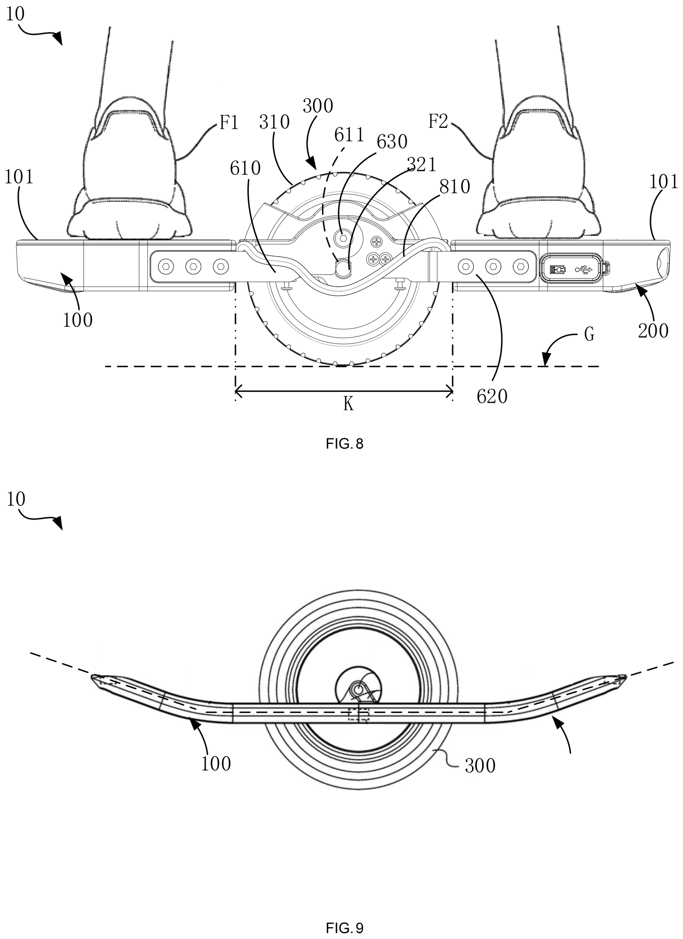

As shown in FIGS. 1, 6, 8, and 9, when the electric vehicle 10 is in the unfolded state, the wheel assembly 300 may be positioned substantially centrally between the first foot platform 100 and the second foot platform 200. The term "substantially centrally" may refer to being exactly centered, or may refer to having a dimensional deviation of at most ±20% relative to the center. The first foot platform 100 and the second foot platform 200 are both substantially plate-like, and each of the first foot platform 100 and the second foot platform 200 has a substantially flat foot support surface 101. As shown in FIG. 8, a surface of the first foot platform 100 facing away from a horizontal ground G and a surface of the second foot platform 200 facing away from the horizontal ground G may be considered as the foot support surfaces 101.

At this time, the foot support surface 101 of the first foot platform 100 and the foot support surface 101 of the second foot platform 200 of the electric vehicle 10 in the unfolded state may be oriented to be stepped on by a first foot F1 and a second foot F2 of a user, respectively. Herein, "stepped on" may be understood at least as allowing the user to normally or stably ride the electric vehicle 10 after stepping thereon.

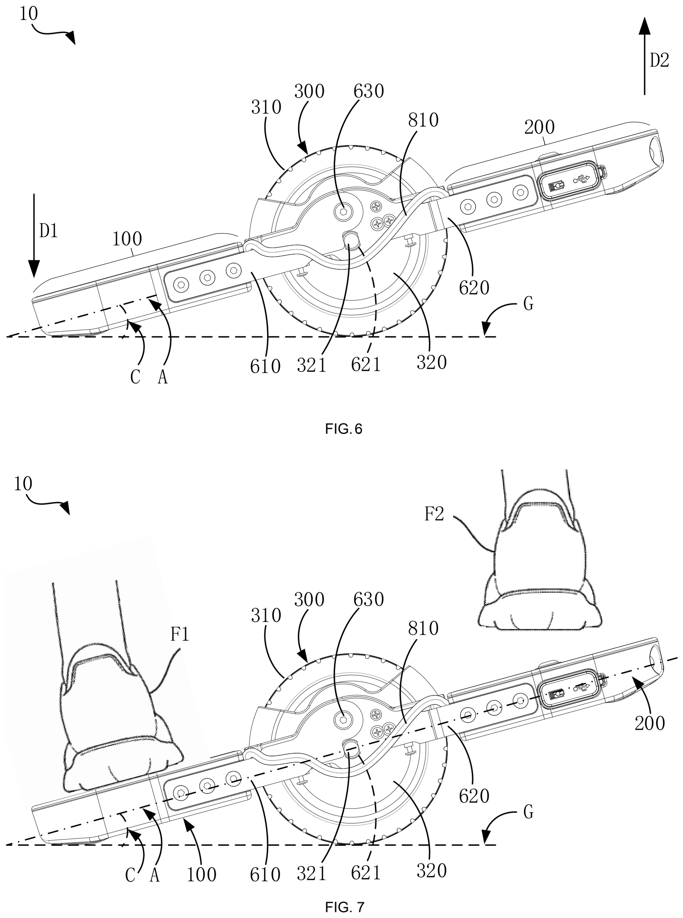

It should be noted that the unfolded state of the electric vehicle 10 may include at least two scenarios. First, as shown in FIG. 7, the foot support surface 101 of the first foot platform 100 and the foot support surface 101 of the second foot platform 200 are substantially parallel, which may be considered as a fully unfolded state of the first foot platform 100 and the second foot platform 200 of the electric vehicle 10. Second, an angle exists between the foot support surface 101 of the first foot platform 100 and the foot support surface 101 of the second foot platform 200 of the electric vehicle 10, which may be considered as a partially unfolded state of the first foot platform 100 and the second foot platform 200 of the electric vehicle 10. It can be understood that, regardless of which of the above unfolded states the electric vehicle 10 is in, it suffices as long as the treading surfaces of the electric vehicle 10 allow the user's two feet to step thereon to achieve the purpose of riding. More specifically, it suffices as long as the rider's two feet can firmly tread on the foot support surface 101 of the first foot platform 100 and the foot support surface 101 of the second foot platform 200, respectively, to allow the rider to ride normally or stably.

It can be understood that during the riding process of the user, the first foot platform 100 and the second foot platform 200 can be controlled by the first foot F1 and the second foot F2 to undergo an attitude change. At this time, the sensor 510 can sense the attitude of at least one of the first foot platform 100 and the second foot platform 200 and transmit an attitude signal to the controller 520. Upon receiving the attitude signal, the controller 520 controls the motor 320 to operate based on the attitude signal to drive the wheel 310 accordingly, thereby enabling the user to control the operation of the wheel 310 by changing the attitudes of the first foot platform 100 and the second foot platform 200 during the riding of the electric vehicle 10. For example, when the user's first foot F1 and second foot F2 are respectively stepped on the foot support surfaces 101 of the first foot platform 100 and the second foot platform 200, and the user is riding forward at a constant speed, assuming the second foot platform 200 is at the rear and the first foot platform 100 is at the front, if the user intends to move backward, the user can control the first foot platform 100 and the second foot platform 200 to tilt backward via the first foot F1 and the second foot F2. At this time, the sensor 510 will sense the changed attitudes of the first foot platform 100 and/or the second foot platform 200 and transmit the attitude signal to the controller 520. The controller 520 will then control the motor 320 based on the attitude signal, causing the motor 320 to drive the wheel 310 to move backward.

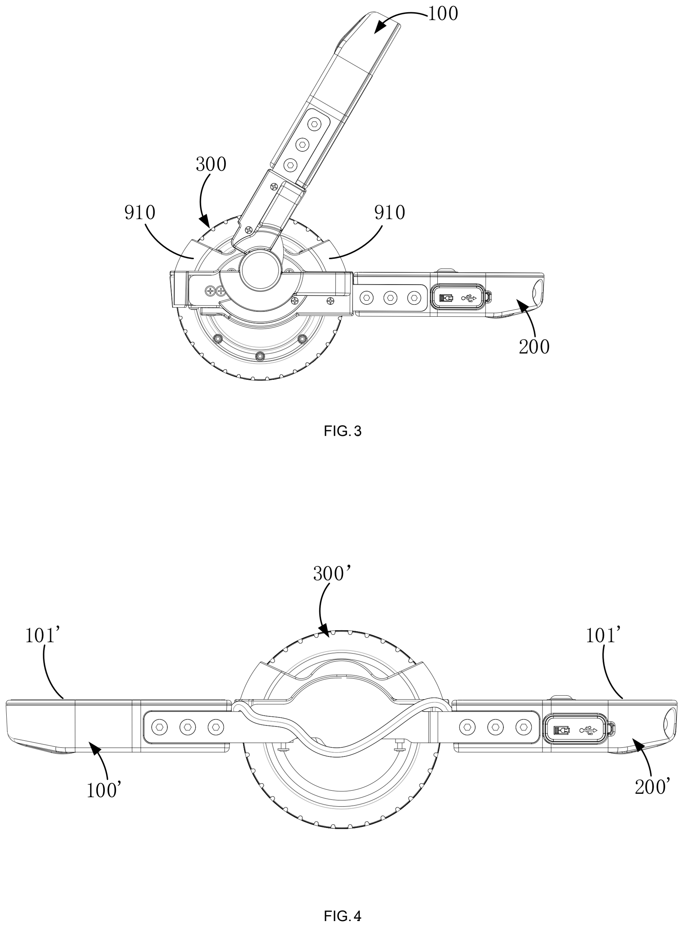

Referring to FIGS. 1, 2, and 3, in the folded state, the first foot platform 100 and the second foot platform 200 are closer to each other than in the unfolded state. The folded state of the electric vehicle 10 may include at least two scenarios. First, as shown in FIG. 2, the foot support surface 101 of the first foot platform 100 and the foot support surface 101 of the second foot platform 200 of the electric vehicle 10 substantially abut against each other, which may be considered as a fully folded state where the treading surface of the first foot platform 100 and the second foot platform 200 are fully folded. Second, as shown in FIG. 3, the foot support surface 101 of the first foot platform 100 and the foot support surface 101 of the second foot platform 200 of the electric vehicle 10 are close to each other but do not completely abut, leaving a gap therebetween, which may be considered as a partially folded state of the first foot platform 100 and the second foot platform 200 of the electric vehicle 10.

It should be noted that after the electric vehicle 10 enters the aforementioned folded state, a user can no longer step thereon for riding. At this time, compared with the unfolded state, the electric vehicle 10 has a reduced dimension or spatial volume in a longitudinal direction due to folding, thereby making it more convenient for the user to carry or pack into a box or bag for transportation or storage.

In the embodiments shown in FIGS. 1 and 2, the first foot platform 100 and the second foot platform 200 are pivotally connected, that is, the first foot platform 100 and the second foot platform 200 can rotate relative to each other to transition the electric vehicle 10 between the unfolded state and the folded state. As shown in FIG. 1, when riding is desired, the electric vehicle 10 can be transitioned to the unfolded state, where the foot support surfaces 101 of the first foot platform 100 and the second foot platform 200 are located substantially in the same plane. It should be noted that, in some embodiments, the foot support surface 101 of the first foot platform 100 and the foot support surface 101 of the second foot platform 200 may also be arranged at an acute or obtuse angle relative to each other, as long as the user's two feet can firmly tread on the foot support surface 101 of the first foot platform 100 and the foot support surface 101 of the second foot platform 200, respectively, to allow the rider to ride normally or stably after stepping thereon. As shown in FIG. 2, when riding ends, the electric vehicle 10 can be transitioned to the folded state. For example, the user applies a force to at least one foot platform by hand to rotate the two foot platforms closer to each other until they abut, that is, the foot support surface 101 of the first foot platform 100 substantially abuts the foot support surface 101 of the second foot platform 200.

In other embodiments, such as the partial embodiment shown in FIG. 4, foot support surfaces 101' of a first foot platform 100' and a second foot platform 200' are always located substantially in the same plane and have fixed relative positions suitable for the rider to ride normally or stably after stepping thereon. Alternatively, the foot support surfaces 101' of the first foot platform 100' and the second foot platform 200' are arranged at an obtuse angle and have fixed relative positions suitable for the rider to ride normally or stably after stepping thereon. The first foot platform 100' and the second foot platform 200' may be integrally formed or assembled in a mutually fixed connection manner such as welding. Here, the mutual fixed connection means that the first foot platform 100' and the second foot platform 200' cannot rotate relative to each other. A wheel assembly 300' is positioned substantially or basically centrally between the first foot platform 100' and the second foot platform 200'.

In some embodiments, as shown in FIGS. 1 and 2, when the electric vehicle 10 is to be switched between the unfolded state and the folded state, any one of the first foot platform 100 and the second foot platform 200 may have a unique rotation path relative to the other. That is, when the electric vehicle 10 is in the unfolded state, for any one of the first foot platform 100 and the second foot platform 200, the user can only rotate it in one direction to bring the first foot platform 100 and the second foot platform 200 closer to each other. In this embodiment, by configuring the electric vehicle 10 to have a unique folding path, it is convenient for the user to identify the first foot platform 100 and the second foot platform 200, avoiding a poor user experience caused by the user stepping on bottom surfaces of the first foot platform 100 and the second foot platform 200 when preparing to mount and ride. In addition, configuring the electric vehicle 10 to have a unique folding path also ensures the stability of the electric vehicle 10 in the unfolded state, preventing the unfolded state of the electric vehicle 10 from being destroyed after the user steps the first foot and the second foot on the first foot platform 100 and the second foot platform 200.

In some embodiments, the first foot platform 100 has a first top surface and a first bottom surface disposed opposite to the first top surface, and the second foot platform 200 has a second top surface and a second bottom surface disposed opposite to the second top surface. The first top surface is a treading surface of the first foot platform 100 for the user's foot to step on, and the second top surface is a treading surface of the second foot platform 200 for the user's foot to step on. When at least one of the first foot platform 100 and the second foot platform 200 is rotated to transition the electric vehicle 10 from the unfolded state to the folded state, the first top surface and the second top surface can approach each other face-to-face, while the first bottom surface and the second bottom surface cannot approach each other face-to-face. Thus, the electric vehicle 10 is configured to have a unique folding path, which facilitates the user in determining the front and back sides of the first foot platform 100 and the second foot platform 200, avoiding a poor user experience caused by the user stepping on the first bottom surface and the second bottom surface of the electric vehicle 10 when preparing to mount and ride.

In some examples, referring to FIG. 6, overall weights of the first foot platform 100 and the second foot platform 200 may be inconsistent. When an external force applied to the electric vehicle 10 in the unfolded state on a horizontal ground G to keep the foot support surfaces 101 of the first foot platform 100 and the second foot platform 200 substantially parallel to the horizontal ground G is removed, one of the first foot platform 100 and the second foot platform 200 can spontaneously rotate in a first direction D1 to approach the horizontal ground G, and the other of the first foot platform 100 and the second foot platform 200 can spontaneously rotate in a second direction D2 opposite to the first direction D1 to move away from the horizontal ground G.

For example, in the embodiment shown in FIG. 6, the weight of the first foot platform 100 is greater than the weight of the second foot platform 200. When the external force applied to the electric vehicle 10 in the unfolded state on the horizontal ground G to keep the foot support surfaces 101 of the first foot platform 100 and the second foot platform 200 substantially parallel to the horizontal ground G is removed, the first foot platform 100 spontaneously rotates in the first direction D1 to approach the horizontal ground G, and the second foot platform 200 spontaneously rotates in the second direction D2 to move away from the horizontal ground G.

As shown in FIG. 7, such a configuration, on the one hand, allows the user to lift the first foot F1 with a smaller amplitude, making the action more effortless and smooth. On the other hand, it also facilitates the user's first foot F1 to quickly step firmly on the first foot platform 100 on the horizontal ground G, which is beneficial for the user to subsequently step the second foot F2 on the second foot platform 200, resulting in a more stable overall standing posture of the user and higher safety during mounting. As shown in FIG. 8, after the user stands on the electric vehicle 10, the user can shift the center of gravity of the body slightly toward the second foot platform 200 and cause the first foot platform 100 to tilt up away from the ground to ride the electric vehicle 10.

The configuration in this embodiment where the overall weights of the first foot platform 100 and the second foot platform 200 are inconsistent may allow the user to more easily know how to mount the vehicle. Since one of the foot platforms is heavier, when the electric vehicle 10 is placed on a ground surface in the unfolded state, the heavier platform will automatically tilt. Thus, the user can quickly know to step the first foot onto the tilted platform first, and then step the other foot onto the other foot platform to start riding. Therefore, the weight configuration with inconsistent weights of the two foot platforms in this embodiment effectively improves the user experience.

In some examples, referring to FIG. 6, when an external force applied to the electric vehicle 10 in the unfolded state on the horizontal ground G to keep the foot support surfaces 101 of the first foot platform 100 and the second foot platform 200 substantially parallel to the horizontal ground G is removed, the first foot platform 100 spontaneously tilts in the first direction D1 until it touches the horizontal ground G, and the second foot platform 200 spontaneously tilts in the second direction D2 to move away from the horizontal ground G. In this way, when the electric vehicle 10 is unridden and in the unfolded state on the ground surface, the first foot platform 100 naturally tilts down until it touches the ground surface. Consequently, the user can first step the first foot F1 onto the first foot platform 100 which has tilted down to touch the ground surface, and then step the second foot F2 onto the second foot platform 200. This greatly improves the riding experience of the user when mounting the vehicle, because it is easier for the user to judge which foot platform to step on first, thereby facilitating the mounting operation.

In other embodiments, the weight of the second foot platform 200 may be greater than the weight of the first foot platform 100. When the external force applied to the electric vehicle 10 in the unfolded state on the horizontal ground G to keep the foot support surfaces 101 of the first foot platform 100 and the second foot platform 200 substantially parallel to the horizontal ground G is removed, the second foot platform 200 spontaneously approaches the horizontal ground G, and the first foot platform 100 spontaneously moves away from the horizontal ground G. The mounting method in such embodiments is not repeated here.

Referring to FIG. 1, in some embodiments, the electric vehicle 10 has a longitudinal axis A and a transverse axis B perpendicular to the longitudinal axis A. A rotational axis of the wheel 310 is substantially parallel to the transverse axis B. As shown in FIGS. 7, 8, and 9, when the electric vehicle 10 is in the unfolded state, the wheel assembly 300 is centrally positioned between the first foot platform 100 and the second foot platform 200 to ensure riding stability when the user rides the electric vehicle 10. For example, in the unfolded state of the electric vehicle 10, the wheel assembly 300 is disposed centrally between the first foot platform 100 and the second foot platform 200 in a width direction.

In some embodiments, as shown in FIGS. 1-3, the motor 320 has a motor shaft 321. The motor shaft 321 extends along the width direction of the electric vehicle 10. Widths of the first foot platform 100 and the second foot platform 200 in a direction parallel to the motor shaft 321 are equal, and a lateral width of the wheel 310 is substantially equal to the width of the first foot platform 100/second foot platform 200. This makes the structural layout of the electric vehicle 10 rational, allowing the width of the tire to be as large as possible without the wheel 310 occupying excessive space, thereby increasing the stability when the user rides the electric vehicle 10.

When the electric vehicle 10 is in the unfolded state, the longitudinal axis A of at least a portion of the first foot platform 100 and the longitudinal axis A of at least a portion of the second foot platform 200 coincide with each other. During riding, the user steps the first foot on a portion of the first foot platform 100 where the longitudinal axis A coincides with the longitudinal axis A of the second foot platform 200, and steps the second foot on a portion of the second foot platform 200 where the longitudinal axis A coincides with the longitudinal axis A of the first foot platform 100.

When the electric vehicle 10 is in the folded state, at least a portion of the first foot platform 100 and at least a portion of the second foot platform 200 contact each other, so that the first foot platform 100 and the second foot platform 200 are as close as possible in the folded state. It can be understood that when the treading surface of the first foot platform 100 and the treading surface of the second foot platform 200 are both completely flat, the longitudinal axis A of the first foot platform 100 and the longitudinal axis A of the second foot platform 200 completely coincide in the unfolded state of the electric vehicle 10, and the first foot platform 100 and the second foot platform 200 completely abut in the folded state of the electric vehicle 10.

In some embodiments, as shown in FIG. 9, the longitudinal axis A of the first foot platform 100 and the longitudinal axis A of the second foot platform 200 are both curved lines, and a portion of the longitudinal axis A of the first foot platform 100 and a portion of the longitudinal axis A of the second foot platform 200 coincide with each other. As another example, as shown in FIG. 7, the longitudinal axis A of the first foot platform 100 and the longitudinal axis A of the second foot platform 200 are both straight lines and completely coincide.

Referring to FIG. 6, when the electric vehicle 10 in the unfolded state is placed on the horizontal ground G in a tilted manner such that one of the first foot platform 100 and the second foot platform 200 is oriented in a tilted manner suitable for the user to perform a mounting operation, a tilt angle C of the longitudinal axis A of the electric vehicle 10 in the unfolded state relative to the horizontal ground G may be 5° to 45°. Here, placing the electric vehicle 10 in a tilted manner includes at least two scenarios: first, when the electric vehicle 10 is placed on the ground surface without being affected by an external force, the electric vehicle 10 can tilt spontaneously; second, placing the electric vehicle 10 on the ground surface and applying an external force thereto to cause it to tilt.

For example, in the embodiment shown in FIG. 6, the first foot platform 100 of the electric vehicle 10 in the unfolded state and unaffected by an external force tilts and rests against the horizontal ground G, while the second foot platform 200 is suspended. An angle between the foot support surface 101 of the first foot platform 100 and the horizontal ground G may be considered as the tilt angle of the longitudinal axis A of the electric vehicle 10 in the unfolded state relative to the horizontal ground G. As shown in FIG. 6, when the user performs the mounting operation, the first foot platform 100 maintains a suitable tilt angle C with the horizontal ground G, which facilitates the user to lift the first foot F1 and place it on the first foot platform 100. With such a configuration, on the one hand, the amplitude of lifting the first foot F1 by the user can be smaller, making the action more effortless and smooth; on the other hand, it also facilitates the user's first foot F1 to quickly step firmly on the first foot platform 100 on the horizontal ground G, which is beneficial for the user to subsequently step the second foot F2 onto the second foot platform 200, resulting in a more stable overall standing posture of the user and higher safety during mounting.

It can be understood that the tilt angle C being in the range of 5° to 45° is more favorable for the user to perform the mounting operation. Conversely, when the tilt angle C is greater than 45°, it is possible to avoid an excessive included angle between the sole of the user's first foot F1 and the horizontal ground G which would make it difficult to stand firmly, thereby improving the safety of the mounting operation. In addition, as shown in FIG. 6 and FIG. 7, and in combination with the above description, when the electric vehicle 10 is in the unfolded state and unaffected by an external force, the longitudinal axis A is tilted relative to the horizontal ground G. This means that one of the first foot platform 100 and the second foot platform 200 is closer to the horizontal ground G than the other, which can guide the user when performing the mounting action. For example, in FIG. 7, the first foot platform 100 is closer to the horizontal ground G than the second foot platform 200, thereby guiding the user to step the first foot F1 onto the first foot platform 100 first.

It can be understood that, for the user, the smaller the angle of the tilt angle C of the longitudinal axis A of the electric vehicle 10 in the unfolded state relative to the horizontal ground G-for instance, in an extreme case where the tilt angle C is close to zero-the more nearly parallel the longitudinal axis A of the electric vehicle 10 is to the horizontal ground G. Consequently, it is difficult for the user to visually and quickly judge which foot platform to step on first. That is, the tilt angle C is set to be no less than 5° to ensure that the tilt of the longitudinal axis A of the electric vehicle 10 relative to the horizontal ground G is relatively obvious, allowing the user to quickly determine which of the two foot platforms is closer to the horizontal ground G when preparing to mount the vehicle, thereby better guiding the user to perform the mounting operation.

In addition, a more important consideration for setting the tilt angle C to be no less than 5° is that such a small angle would imply that the foot platforms of the balancing skateboard 10 are either extremely long or the diameter of the wheel is extremely small. Consequently, such a balancing skateboard would be either difficult to carry (due to the very long foot platforms) or have extremely poor passability (due to the small wheel diameter). Here, passability may refer to the obstacle crossing capability of the balancing skateboard.

In other embodiments, when the electric vehicle 10 is placed on the horizontal ground G in a tilted manner in the unfolded state, the first foot platform 100 may also be set to be merely tilted relative to the horizontal ground G without contacting the horizontal ground G, that is, the first foot platform 100 is suspended and a certain distance still exists between the first foot platform 100 and the horizontal ground G.

Further, in some preferred embodiments, the tilt angle C of the longitudinal axis A of the electric vehicle 10 relative to the horizontal ground G may be 10° to 30°, so as to optimize the user's mounting experience.

More preferably, in some embodiments, the tilt angle C of the longitudinal axis A of the electric vehicle 10 relative to the horizontal ground G is approximately 15°, so as to further optimize the user's mounting and treading experience.

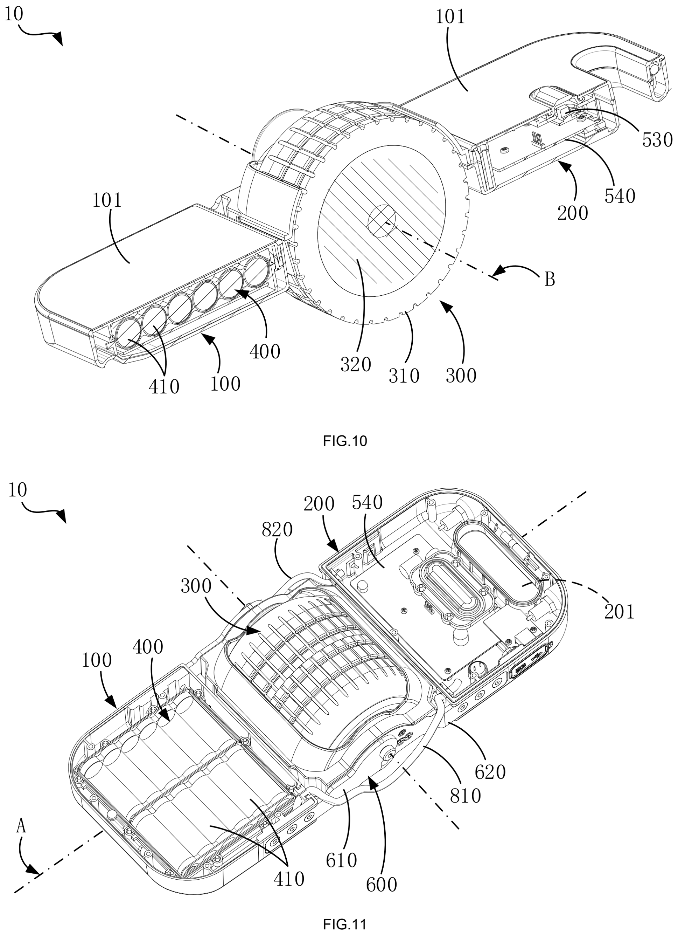

Referring to FIGS. 10 to 12, in some embodiments, the battery assembly 400 may be installed in only one of the first foot platform 100 and the second foot platform 200. For example, if the battery assembly 400 is installed only in the first foot platform 100, on the one hand, there is no need to install battery assemblies 400 in both foot platforms simultaneously, making the installation more reasonable and convenient. On the other hand, components such as the sensor 510 and the controller 520 can be installed in the second foot platform 200, so that the not-so-abundant space inside the first foot platform 100 can be used as much as possible for installing the battery assembly 400. This makes product design and actual product assembly more efficient. Since the first foot platform 100 is used only for installing the battery assembly 400 at this time, only the influence of relevant spatial dimensions or positions of the first foot platform 100 on the battery installation needs to be considered during design and assembly. If other components were also installed inside the first foot platform 100, or if the battery assembly 400 also needed to be installed in the second foot platform which already has other components, then the influence of the spatial dimensions or positions of the other components on the battery installation would need to be considered during design and assembly, which would make the structural design of the product and the product assembly during the manufacturing process more difficult and cumbersome. Therefore, the design of this embodiment can simplify product design and product assembly, and improve design and assembly efficiency. It also improves the space utilization efficiency of a single platform, thereby accommodating more batteries and increasing the endurance of the electric vehicle 10. Naturally, the battery assembly 400 may also be installed only in the second foot platform 200, and the specific effects thereof can refer to the description above regarding the battery assembly 400 being installed only in the first foot platform 100, which will not be repeated here.

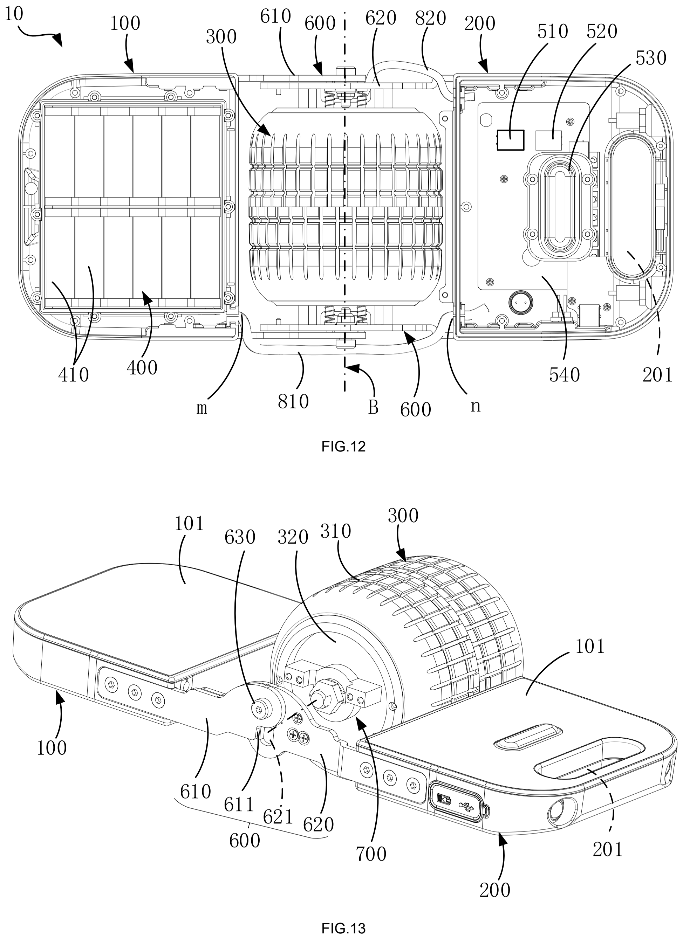

In addition, the battery assembly 400 (which may also be referred to as a battery pack) may include one or more batteries 410 (which may also be referred to as cells), such as one or more lithium batteries that are relatively light in weight and have a relatively high power density. For example, as shown in FIG. 12, a plurality of batteries 410 are installed only in the first foot platform 100 and occupy the vast majority of the space within the first foot platform 100 to increase the capacity of the batteries 410 as much as possible, thereby increasing the endurance of the electric vehicle 10. The second foot platform 200 is used for installing the circuit board 540, and one controller 520 and one sensor 510 electrically connected to the circuit board 540.

In addition, as shown in FIG. 12, in some embodiments, a first cable 810 is further provided between the first foot platform 100 and the second foot platform 200. One end of the first cable 810 extends into a housing of the first foot platform 100, and the other end extends into a housing of the second foot platform 200. The battery assembly 400 in the first foot platform 100 can be electrically connected to the circuit board 540, the controller 520, the sensor 510, etc., in the second foot platform 200 via the first cable 810. A second cable 820 is further provided between the second foot platform 200 and the motor 320. One end of the second cable 820 extends into the housing of the second foot platform 200 and is electrically connected to the battery assembly 400 via the circuit board 540 and the first cable 810, and the other end is electrically connected to the motor 320 of the wheel assembly 300 to at least supply energy thereto and transmit control signals.

Further, as shown in FIG. 12, since the power source is connected to the controller 520 only via the first cable 810, while the controller 520 is connected not only to the power source via the first cable 810 but also to the motor 320 via the second cable 820, obviously, the number of cables led out from the controller 520 is greater. Therefore, disposing the controller 520 in the second foot platform 200, rather than disposing the controller 520 in the first foot platform 100 which is rotatable relative to the second foot platform 200, can avoid interference with the rotation of the first foot platform 100 potentially caused by a larger number of cables led out from the first foot platform 100, or avoid adverse effects on the lifespan of the cables caused by the rotation itself.

In some embodiments, referring to FIGS. 8 and 12, a distance between the first foot platform 100 and the second foot platform 200 of the electric vehicle 10 in the unfolded state is a first distance. The first distance may refer to an average distance between an inner end of the first foot platform 100 and an inner end of the second foot platform 200, as shown by distance K in FIG. 8. The first distance K is smaller than a length of a portion of the first cable 810 located between the inner end of the first foot platform 100 and the inner end of the second foot platform 200. Therefore, the portion of the first cable 810 between the inner end of the first foot platform 100 and the inner end of the second foot platform 200 is in a non-linear arrangement or a curved arrangement. As shown in FIGS. 8 and 12, the portion of the first cable 810 between a node m and a node n is exactly the portion located or distributed between the inner end of the first foot platform 100 and the inner end of the second foot platform 200. The node m and the node n may refer to points where the first cable 810 contacts the inner end of the first foot platform 100 and the inner end of the second foot platform 200, respectively.

It can be seen that the portion of the first cable 810 between the node m and the node n is curved as a whole, such that a total length of the cable between the node m and the node n (e.g., when the curved cable is straightened) is greater than the distance K. Such an arrangement in terms of cable length can prevent the first cable 810 from being disconnected or damaged due to excessive pulling when the electric vehicle 10 transitions between the folded state and the unfolded state.

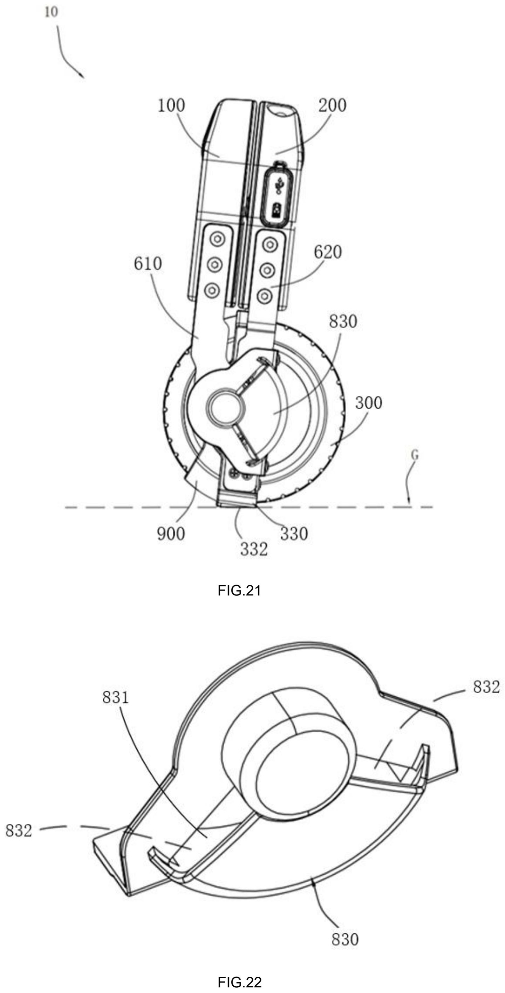

In some embodiments, as shown in FIG. 21, a Cable housing 830 is provided on each of two sides of the wheel 310. The Cable housing 830 is configured for cables to pass therethrough to facilitate storage and organization of the cables.

Specifically, as shown in FIGS. 21 and 22, the Cable housing 830 has an accommodating space 831 on a side facing the wheel 310. A wire passing hole 832 is provided on each of two sides of the Cable housing 830, and each wire passing hole 832 communicates with the accommodating space 831. Among the two threading slots 832, one is disposed adjacent to the first foot platform 100, and the other is disposed adjacent to the second foot platform 200. Consider a case where the battery assembly 400 is disposed in the first foot platform 100 and the controller 520 is disposed in the second foot platform 200.

A first cable 810 connected between the controller 520 and the battery assembly 400 is led out from the first foot platform 100, passes into the accommodating space 831 through the wire passing hole 832 adjacent to the first foot platform 100, passes out through the wire passing hole 832 adjacent to the second foot platform 200, and is then led into the second foot platform 200. A second cable 820 connected between the controller 520 and the motor 320 is led out from the second foot platform 200, passes into the accommodating space 831 through the wire passing hole 832 adjacent to the second foot platform 200, and then passes into the motor 320 from an inner cavity of the motor shaft 321. Preferably, the first cable 810 connected between the controller 520 and the battery assembly 400 and the second cable 820 connected between the controller 520 and the motor 320 are routed on the two sides of the wheel 310, respectively. That is, the first cable 810 and the second cable 820 are accommodated by the Cable housings 830 on the two sides of the wheel 310, respectively.

Optionally, as shown in FIG. 12, a rider presence sensor 530 is mounted on the second foot platform 200. The rider presence sensor 530 is configured to sense whether a foot of a user steps on the second foot platform 200. The rider presence sensor 530 is electrically connected to the controller 520. When the rider presence sensor 530 senses that the foot of the user steps on the foot support surface 101 of the second foot platform 200, the controller 520 receives a sensing signal from the rider presence sensor 530 and controls the motor 320 to start.

When the user intends to perform a mounting operation, since the second foot platform 200 is suspended and further away from the ground, it can guide the user to first step one foot onto the first foot platform 100 where the rider presence sensor 530 is not installed, and then step the other foot onto the second foot platform 200 to trigger the rider presence sensor 530 on the second foot platform 200, thereby starting the electric vehicle 10. Such a configuration can prevent, as much as possible, a novice user from stepping the other foot onto the second foot platform 200 to trigger the rider presence sensor 530 thereon and directly starting the electric vehicle 10 while the one foot has not yet stepped on the first foot platform 100, thereby better protecting the safety of the novice user.

In some embodiments, the electric vehicle 10 may further have a novice mode and an expert mode. In the expert mode, when the rider presence sensor 530 senses that the foot of the user has stepped on the second foot platform 200, the controller 520 controls the motor 320 to immediately drive the wheel 310, thereby bringing certain riding pleasure to the user. In the novice mode, after the rider presence sensor 530 senses that the foot of the user has stepped on the second foot platform 200, the controller 520 controls the motor 320 to drive the wheel 310 only when the sensor 510 senses that the first foot platform 100 is stepped on to be substantially horizontal, so as to avoid the user losing balance and failing to normally use the electric vehicle 10.

Referring to FIGS. 11 to 13, in some embodiments, at least one of the first foot platform 100 and the second foot platform 200 is provided with a handle portion 201 for gripping. The handle portion 201 can be gripped by the user to improve portability. The handle portion 201 is located at an end of the first foot platform 100 or the second foot platform 200 away from the wheel 310.

As shown in FIGS. 10 and 11, it may be that one of the first foot platform 100 and the second foot platform 200 is provided with the handle portion 201 while the other platform is not provided with the same or similar handle portion 201. Furthermore, the handle portion 201 may be preferentially disposed on one of the first foot platform 100 and the second foot platform 200 where the battery assembly 400 is not disposed. For example, in the embodiment shown in FIG. 11, the battery assembly 400 is disposed in the first foot platform 100, and only the second foot platform 200 is provided with the handle portion 201. Such a structural configuration can avoid an internal space of the first foot platform 100 being compressed due to the provision of the handle portion 201, that is, ensuring that the space in the first foot platform 100 accommodates as many batteries 410 as possible to increase the capacity of the batteries 410. In other embodiments, if the battery assembly 400 is disposed only in the second foot platform 200, the handle portion 201 is provided on the first foot platform 100.

Referring to FIGS. 1, 2, 13, and 14, in some embodiments, the electric vehicle 10 further includes two connecting arm assemblies 600 disposed opposite to each other. A mounting assembly 700 is detachably fixed to each of two opposite ends of the motor shaft 321. Each connecting arm assembly 600 includes a first connecting arm 610 fixed to the first foot platform 100 and a second connecting arm 620 fixed to the second foot platform 200. The second connecting arm 620 is fixedly connected to the mounting assembly 700 such that the second foot platform 200 is fixed together with the motor shaft 321. The first connecting arm 610 is rotatably connected to the second connecting arm 620 such that the first foot platform 100 is rotatable relative to the second foot platform 200. In this embodiment, providing the mounting assemblies 700 at both ends of the motor shaft 321 facilitates the fixing of the connecting arm assemblies 600 to the motor shaft 321. Moreover, the detachable connection between the mounting assemblies 700 and the ends of the motor shaft 321 facilitates the installation, disassembly, maintenance, and replacement of the mounting assemblies 700 on the motor shaft 321.

Specifically, the two second connecting arms 620 are respectively located on two sides of the wheel 310. Each second connecting arm 620 is fixedly connected to a corresponding mounting assembly 700 located on the same side of the wheel 310 as the second connecting arm 620. That is, a first end of any one of the two second connecting arms 620 is fixedly connected to the second foot platform 200, and a second end of the any one of the two second connecting arms 620 opposite to the first end is fixedly connected to the corresponding mounting assembly 700 located on the same side of the wheel 310. The two first connecting arms 610 are respectively located on the two sides of the wheel 310. Each first connecting arm 610 is rotatably connected to a corresponding second connecting arm 620 located on the same side of the wheel 310 as the first connecting arm 610. That is, a first end of any one of the two first connecting arms 610 is fixedly connected to the first foot platform 100, and a second end of the any one of the two first connecting arms 610 opposite to the first end is rotatably connected to the corresponding second connecting arm 620 located on the same side of the wheel 310.

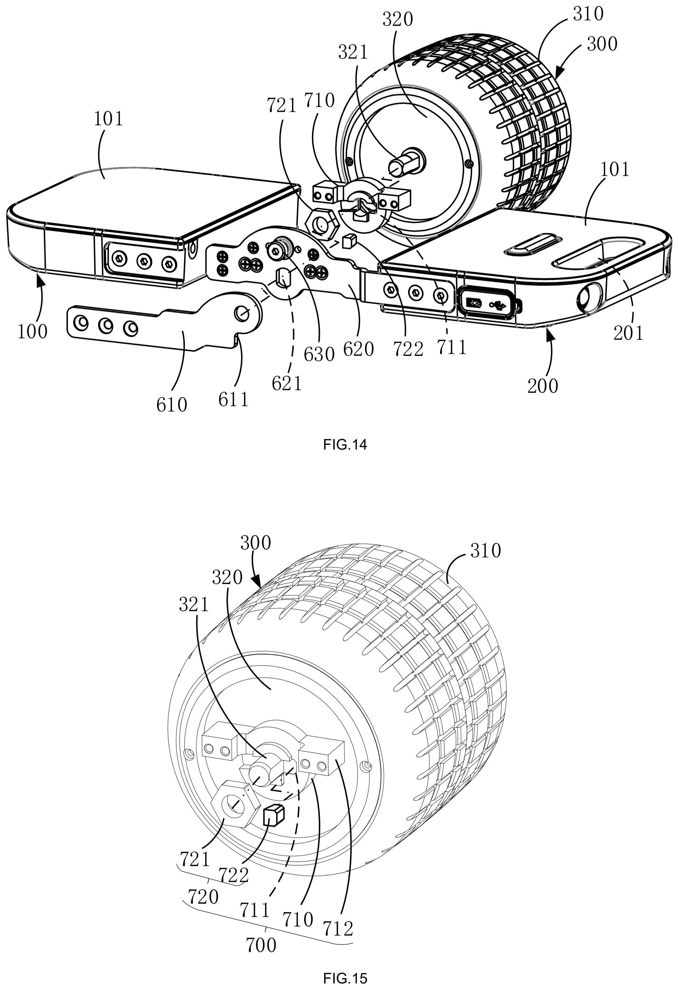

In some embodiments, the first connecting arm 610 may be fixed to the first foot platform 100 by means of a threaded connection, a snap-fit connection, welding, or the like. The second connecting arm 620 may be fixed to the first foot platform 100 by means of a threaded connection, a snap-fit connection, welding, bonding, or the like. For example, in the embodiment shown in FIGS. 13 and 14, the first connecting arm 610 is fixed to the first foot platform 100 by a threaded connection, and the second connecting arm 620 is fixed to the second foot platform 200 by a threaded connection.

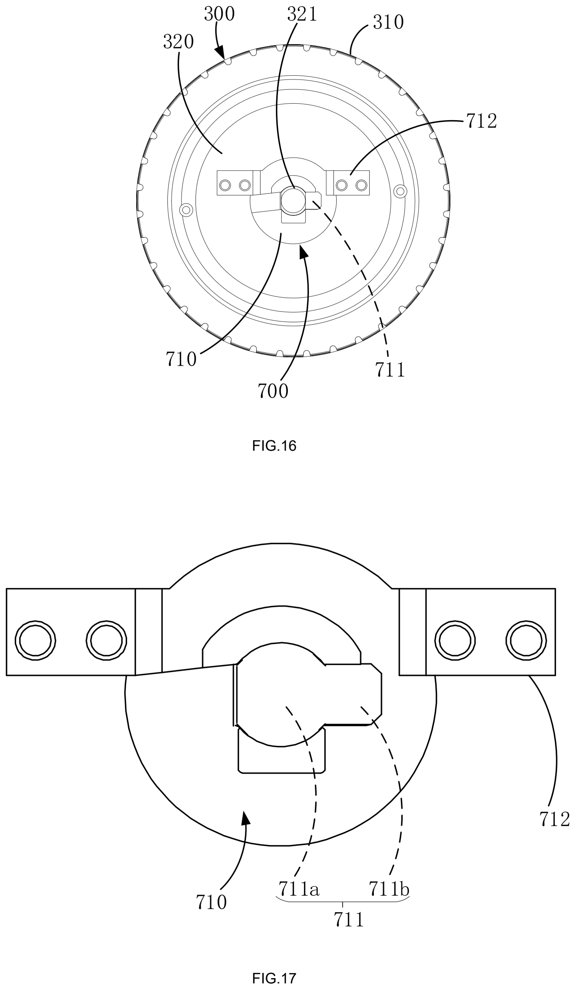

Additionally, as shown in FIGS. 13 to 17, in some embodiments, the mounting assembly 700 may include a mounting bracket 710 and a fastener assembly 720. The second connecting arm 620 is fixed to the mounting bracket 710. The mounting bracket 710 is defined with a mounting hole 711. The mounting bracket 710 is sleeved on the motor shaft 321 through the mounting hole 711. The fastener assembly 720 is configured to fix the mounting bracket 710 to the motor shaft 321.

More specifically, as shown in FIGS. 14 to 17, in some embodiments, fixing portions 712 further extend from two sides of the mounting bracket 710. The second connecting arm 620 may be connected to a side of the fixing portion 712 facing away from the wheel 310 by means of a threaded connection, a snap-fit connection, welding, or the like. In this embodiment, the fixing portion 712 has a substantially flat mounting surface located on the side of the fixing portion 712 facing away from the wheel 310, and the second connecting arm 620 is connected to the mounting surface via two screws. In this embodiment, by connecting the second connecting arm 620 to the two fixing portions 712 of the mounting bracket 710, the stability of the connection between the second connecting arm 620 and the mounting bracket 710 is improved.

The fastener assembly 720 includes a nut 721 and a wedge-shaped fixing block 722. The mounting hole 711 includes a first hole portion 711a and a second hole portion 711b communicating with each other. The first hole portion 711a is configured for the motor shaft 321 to pass therethrough. The second hole portion 711b is configured for the wedge-shaped fixing block 722 to be embedded therein, so that a hole wall of the mounting hole 711 abuts against and is fixed to an outer peripheral surface of the motor shaft 321.

As shown in FIGS. 14 and 15, in some embodiments, the second connecting arm 620 is defined with a through hole 621, and the motor shaft 321 passes through the second connecting arm 620 via the through hole 621. The motor shaft 321 may be a non-circular shaft, that is, a cross-sectional profile of the motor shaft 321 may be non-circular. For example, in the embodiment shown in FIG. 10, the motor shaft 321 may be a flat shaft, and the through hole 621 is adapted to the motor shaft 321. As another example, in the embodiment shown in FIG. 14, a profile of at least a portion or an end of the motor shaft 321 may be non-circular, and the first hole portion 711a of the mounting bracket 710 is adapted to the motor shaft 321 to limit relative rotation between the mounting bracket 710 and the motor shaft 321.

After the motor shaft 321 passes through the first hole portion 711a, the wedge-shaped fixing block 722 can be embedded into the second hole portion 711b to increase the reliability of the mating between the mounting bracket 710 and the motor shaft 321. Threads may be provided on the motor shaft 321. After the motor shaft 321 passes through the first hole portion 711a, the nut 721 can be tightened and fixed onto the motor shaft 321, and the mounting bracket 710 is made to abut against the hub motor 320.

Further, as shown in FIGS. 13 and 14, in some embodiments, the first connecting arm 610 is rotatably connected to and partially overlaps the second connecting arm 620. A pivot 630 is provided on a surface of the second connecting arm 620 facing the first connecting arm 610. The first connecting arm 610 and the second connecting arm 620 are hinged via the pivot 630. As shown in FIGS. 1 and 2, an axis of the pivot 630 is arranged non-coaxially with and parallel to an axis of the motor shaft 321, so that a rotation axis between the first connecting arm 610 and the corresponding second connecting arm 620 is offset from the motor shaft 321. In other embodiments, the pivot 630 may also be disposed on the first connecting arm 610, as long as it satisfies the rotatable connection between the first connecting arm 610 and the second connecting arm 620.

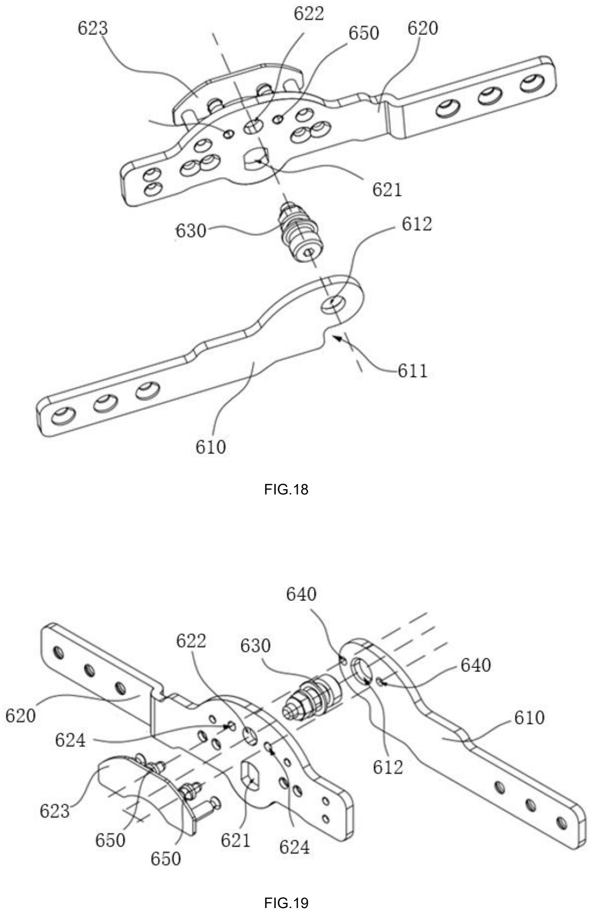

Still further, as shown in FIGS. 18 and 19, the first connecting arm 610 has a first shaft hole 612, and the corresponding second connecting arm 620 has a second shaft hole 622. The pivot 630 passes through the second shaft hole 622 and the first shaft hole 612 sequentially. The pivot 630 is configured such that the first connecting arm 610 or the second connecting arm 620 disposed on the pivot 630 does not move axially relative to the pivot 630. For example, the pivot 630 is a pin.

In addition, it can be understood that in any one of the connecting arm assemblies 600, the second connecting arm 620 is fixedly connected to the second foot platform 200. Thus, for the second foot platform 200, the two second connecting arms 620 fixedly connected thereto are respectively connected to the corresponding mounting assemblies 700 from both sides of the wheel 310. Therefore, when both mounting assemblies 700 abut against side walls of the wheel 310, and the two second connecting arms 620 are assembled in one-to-one correspondence with the two mounting assemblies 700, the mounting assemblies 700 cannot move axially on the motor shaft 321. This results in high assembly stability. That is, even if the nut 721 loosens, the mounting assembly 700 will not be displaced on the motor shaft 321, thereby improving the stability of the connection between the mounting assembly 700 and the motor shaft 321.

In some embodiments, referring to FIG. 8, when the foot support surfaces 101 of the first foot platform 100 and the second foot platform 200 face away from the horizontal ground G, the pivot 630 is further away from the horizontal ground G relative to the motor shaft 321. That is, in a height direction perpendicular to the horizontal ground G, the pivot 630 may be located above the motor shaft 321.

It can be understood that in some practical scenarios, in order to improve the portability of the electric vehicle 10, a wheel assembly 300 with a smaller diameter may be selected. This means that the first foot platform 100 and the second foot platform 200 of the electric vehicle 10 in the unfolded state and during traveling are closer to the horizontal ground G. Consequently, when facing obstacles such as stones or curbs on the horizontal ground G during traveling, the first foot platform 100 and the second foot platform 200 may interfere with the obstacles, thereby affecting the traveling. Therefore, disposing the pivot 630 above the motor shaft 321 can increase heights of the first foot platform 100 and the second foot platform 200. That is, the first foot platform 100 and the second foot platform 200 are further away from the horizontal ground G, resulting in better obstacle avoidance capability and improving the adaptability of the electric vehicle 10 to road conditions.

In some embodiments, as shown in FIG. 1, when the electric vehicle 10 is in the unfolded state, the foot support surface 101 of the first foot platform 100 and the foot support surface 101 of the second foot platform 200 are coplanar. This ensures that the user has a good feel when riding the electric vehicle 10, preventing the user from feeling that the first foot platform 100 and the second foot platform 200 are uneven.

Further, when the electric vehicle 10 is in the unfolded state, the pivot 630 is located within a plane where the foot support surfaces 101 are located, or the pivot 630 is located above the plane where the foot support surfaces 101 are located, so as to avoid the pivot 630 coinciding with the motor shaft 321 and interfering with the folding between the first foot platform 100 and the second foot platform 200.

Still further, as shown in FIG. 8, the pivot 630 may be located simultaneously within the foot support surface 101 of the first foot platform 100 and the foot support surface 101 of the second foot platform 200. Such a configuration allows the foot support surface 101 of the first foot platform 100 and the foot support surface 101 of the second foot platform 200 of the electric vehicle 10 in the folded state to close and abut against each other, so that the space occupied by the electric vehicle 10 in the folded state is as small as possible.

As shown in FIG. 13, in one embodiment, a abutment portion 611 is formed on a side of the first connecting arm 610 close to the motor shaft 321. As shown in FIGS. 1 and 2, when the first foot platform 100 rotates counter-clockwise D4 relative to the second foot platform 200 until the electric vehicle 10 assumes the unfolded state, the first connecting arm 610 is substantially parallel to the second connecting arm 620. The first connecting arm 610 can abut against the motor shaft 321 via the abutment portion 611 to restrict the rotation of the first connecting arm 610, such that the first connecting arm 610 cannot continue to rotate counter-clockwise D4. At this time, the first connecting arm 610 can only rotate relative to the second connecting arm 620 in a direction opposite to the counter-clockwise direction D4, meaning the first foot platform 100 can only rotate relative to the second foot platform 200 in the direction opposite to the counter-clockwise direction D4.

During the transition of the electric vehicle 10 from the folded state to the unfolded state, the first connecting arm 610 continuously rotates relative to the second connecting arm 620 in a unique rotational direction until an end of the motor shaft 321 abuts within the abutment portion 611, and the first connecting arm 610 cannot continue to rotate relative to the second connecting arm 620. At this time, the electric vehicle 10 is in the unfolded state. That is, the electric vehicle 10 is maintained in the unfolded state through the limiting engagement between the abutment portion 611 and the motor shaft 321.

In one embodiment, as shown in FIGS. 18 and 19, the first connecting arm 610 and the second connecting arm 620 are provided with a first locking member 640 positioned on the first connecting arm 610 and a second locking member 650 positioned on the second connecting arm 620. The first locking member 640 and the second locking member 650 are configured to cooperate with each other to perform a locking operation that is revocable by a user, so as to lock the electric vehicle 10 in a current state when the current state of the electric vehicle 10 is the unfolded state or the folded state. The first locking member 640 and the second locking member 650 have an auxiliary position-limiting effect on the electric vehicle 10, preventing the first foot platform 100 from rotating arbitrarily relative to the second foot platform 200 in the unfolded state or the folded state, thereby improving the stability of the electric vehicle 10 in the unfolded state or the folded state.

Optionally, the second locking member 650 includes an elastic column assembly located on the second connecting arm 620, and the first locking member 640 includes a limiting groove located on the first connecting arm 610. The elastic column assembly on the second connecting arm 620 cooperates with the limiting groove on the first connecting arm 610 located on the same side of the wheel 310 as the second connecting arm 620, so as to lock the electric vehicle 10 in the current state when the current state of the electric vehicle 10 is the unfolded state or the folded state.

Specifically, under the action of an elastic force, an end of the elastic column assembly facing the first connecting arm 610 located on the same side of the wheel 310 has a tendency to approach the first connecting arm 610. When the current state of the electric vehicle 10 is the unfolded state or the folded state, the end of the elastic column assembly facing the first connecting arm 610 located on the same side of the wheel 310 is embedded into the corresponding limiting groove to limit the positions of the first connecting arm 610 and the second connecting arm 620 located on the same side of the wheel 310.

Further, as shown in FIG. 3, the electric vehicle 10 further has an intermediate state that is neither the unfolded state nor the folded state. The end of the elastic column assembly close to the first connecting arm 610 is retractable. When the current state of the electric vehicle 10 is the intermediate state, the end of the elastic column assembly close to the first connecting arm 610 abuts against a flat surface of a side of the first connecting arm 610 facing the second connecting arm 620. When the first foot platform 100 is rotated to change the current state of the electric vehicle 10 from the intermediate state to the unfolded state or the folded state, the end of the elastic column assembly close to the first connecting arm 610 is embedded into the corresponding limiting groove under the action of the elastic force to lock the first connecting arm 610 and the second connecting arm 620. It should be noted that when the electric vehicle 10 is locked in the unfolded state or the folded state through the cooperation of the elastic column assembly and the limiting groove, if the user needs to revoke the locking of the electric vehicle 10 to change the electric vehicle 10 from the unfolded state or the folded state to the intermediate state, the user can apply an external force to the first foot platform 100 to overcome the elastic force of the elastic column assembly, causing the first connecting arm 610 to rotate relative to the second connecting arm 620. At this time, the end of the elastic column assembly close to the first connecting arm 610 will disengage from the limiting groove, thereby revoking the locking of the first connecting arm 610 and the second connecting arm 620.

Optionally, as shown in FIGS. 18 and 19, a mounting plate 623 is connected to the second connecting arm 620. For example, the mounting plate 623 is connected to the second connecting arm 620 via screws. The mounting plate 623 is located on a side of the second connecting arm 620 facing away from the first connecting arm 610, and the mounting plate 623 is spaced apart from the second connecting arm 620. The second connecting arm 620 has a through hole 624 corresponding to the limiting groove. One end of the elastic column assembly is connected to the mounting plate 623, and the other end passes through the through hole 624. When the electric vehicle 10 is in the unfolded state or the folded state, the elastic column assembly protrudes out of the through hole 624, and the end close to the first connecting arm 610 is embedded in the limiting groove on the first connecting arm 610.

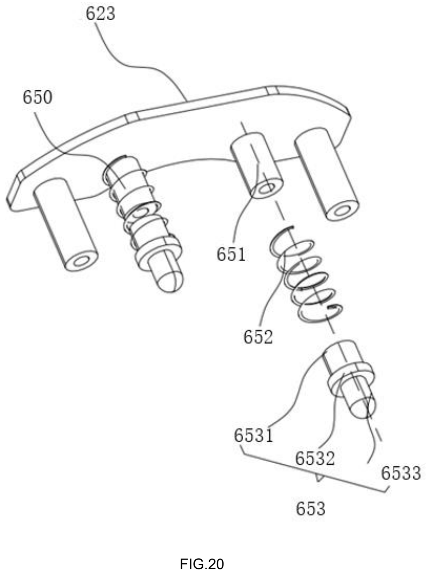

Optionally, as shown in FIG. 20, the elastic column assembly includes a fixed post 651, a spring 652, and a spring-biased locking member 653. The fixed post 651 is connected to a side of the mounting plate 623 facing the second connecting arm 620. The fixed post 651, the spring 652, and the spring-biased locking member 653 are connected sequentially. The spring-biased locking member 653 passes through the through hole 624. Under an elastic abutting force of the spring 652, the spring-biased locking member 653 is partially located on a side of the through hole 624 facing the first connecting arm 610, and an end of the spring-biased locking member 653 away from the spring 652 has a tendency to move toward the first connecting arm 610 under an elastic force of the spring 652. Thus, when the electric vehicle 10 is in the unfolded state or the folded state such that the limiting groove corresponds to the through hole 624, the end of the spring-biased locking member 653 away from the spring 652 embeds into the limiting groove to lock the first connecting arm 610 and the second connecting arm 620.

Further, as shown in FIG. 20, the spring-biased locking member 653 includes a connection portion 6531, a limiting plate 6532, and a pin portion 6533 connected sequentially. An end of the spring 652 away from the fixed post 651 is connected to the connection portion 6531. The connection portion 6531 is columnar, the limiting plate 6532 is disc-shaped, and a central axis of the limiting plate 6532 coincides with a central axis of the connection portion 6531. The limiting plate 6532 is located on a side of the second connecting arm 620 facing the mounting plate 623, and a diameter of the limiting plate 6532 is greater than a diameter of the through hole 624. The pin portion 6533 passes through the through hole 624, and the spring 652 is in a compressed state. Under the action of the elastic force of the spring 652, an end of the pin portion 6533 away from the limiting plate 6532 passes through the through hole 624 and is located on a side of the second connecting arm 620 facing away from the mounting plate 623. However, since the limiting plate 6532 abuts against the side of the second connecting arm 620 facing the mounting plate 623, thereby limiting the movement of the pin portion 6533, the pin portion 6533 will not disengage from the through hole 624. Therefore, even if the electric vehicle 10 is in the intermediate state and the first connecting arm 610 does not block the through hole 624 on the second connecting arm 620, the pin portion 6533 will not slide out of the through hole 624 under the elastic force of the spring 652.

In some embodiments, as shown in FIGS. 19 and 20, the cooperating first locking member 640 and second locking member 650 form a set of locking mechanisms. Any one of the two connecting arm assemblies 600 is provided with at least two sets of locking mechanisms spaced apart. Therefore, the two sets of locking mechanisms on any one connecting arm assembly 600 include two elastic column assemblies on the second connecting arm 620 and two limiting grooves on the first connecting arm 610. The two elastic column assemblies are spaced apart and arranged centrosymmetrically with respect to a rotation axis of the first connecting arm 610 and the second connecting arm 620. The two limiting grooves are spaced apart and arranged centrosymmetrically with respect to the rotation axis of the first connecting arm 610 and the second connecting arm 620. In the unfolded state or the folded state of the electric vehicle 10, the two elastic column assemblies respectively cooperate with the two limiting grooves for locking.

In this embodiment, by providing two sets of locking mechanisms, when the electric vehicle 10 is in the unfolded state or the folded state, each connecting arm assembly 600 locks the first connecting arm 610 and the second connecting arm 620 at at least two different locations, thereby improving locking stability.

In addition, a hardness of the motor shaft 321 may be greater than a hardness of the first connecting arm 610, and the hardness of the first connecting arm 610 is greater than a hardness of a housing of the first foot platform 100. The hardness of the motor shaft 321 may be greater than a hardness of the second connecting arm 620, and the hardness of the second connecting arm 620 is greater than a hardness of a housing of the second foot platform 200. For example, the first connecting arm 610 and the second connecting arm 620 are both made of metal, and the housing of the first foot platform 100 and the housing of the second foot platform 200 are both made of plastic.

It can be understood that if the electric vehicle 10 is maintained in the unfolded state by abutting the first connecting arm 610 against the second connecting arm 620, the first connecting arm 610 and the second connecting arm 620 are prone to simultaneous wear. Once the first connecting arm 610 and the second connecting arm 620 wear out, both need to be replaced simultaneously, which undoubtedly increases the maintenance cost of the electric vehicle 10. In this embodiment, through the above configuration, if the first connecting arm 610 is damaged during use, such as deformation or fracture of the first connecting arm 610, only the first connecting arm 610 needs to be replaced. If the housing of the first foot platform 100 is damaged during use, only the housing of the first foot platform 100 needs to be replaced, thereby greatly reducing the maintenance cost. If the second connecting arm 620 is damaged during use, such as deformation or fracture of the second connecting arm 620, only the second connecting arm 620 needs to be replaced. If the housing of the second foot platform 200 is damaged during use, only the housing of the second foot platform 200 needs to be replaced, thereby greatly reducing the maintenance cost.

In other embodiments, a nylon washer may be provided on the pivot 630. The nylon washer may be located between the first connecting arm 610 and the second connecting arm 620, and two opposite sides of the nylon washer abut against the first connecting arm 610 and the second connecting arm 620, respectively. In this way, during the rotation of the first foot platform 100, a friction force is generated between the nylon washer and the first connecting arm 610, thereby hindering relative rotation of the first foot platform 100 via the generated friction force to achieve an auxiliary position-limiting effect. Therefore, the nylon washer has an auxiliary position-limiting effect on the electric vehicle 10, which can similarly prevent the first foot platform 100 from rotating arbitrarily relative to the second foot platform 200 in the unfolded state or the folded state, improving the stability of the electric vehicle 10 in the unfolded state or the folded state. In this embodiment, by adopting the nylon washer, compared with providing the first locking member 640 and the second locking member 650, the structure is not only simple and easy to assemble, but also the production cost is greatly reduced. In addition, the nylon washer has wear-resistant characteristics, which can ensure that the first foot platform 100 achieves multiple rotations relative to the second foot platform 200, reducing the frequency of maintenance.

In one embodiment, as shown in FIG. 21, a support plate 330 is provided on a side of a rolling surface of the wheel 310. The support plate 330 is fixedly connected to the motor shaft 321. The support plate 330 is configured to support the electric vehicle 10 as a whole when the electric vehicle 10 is in the folded state.

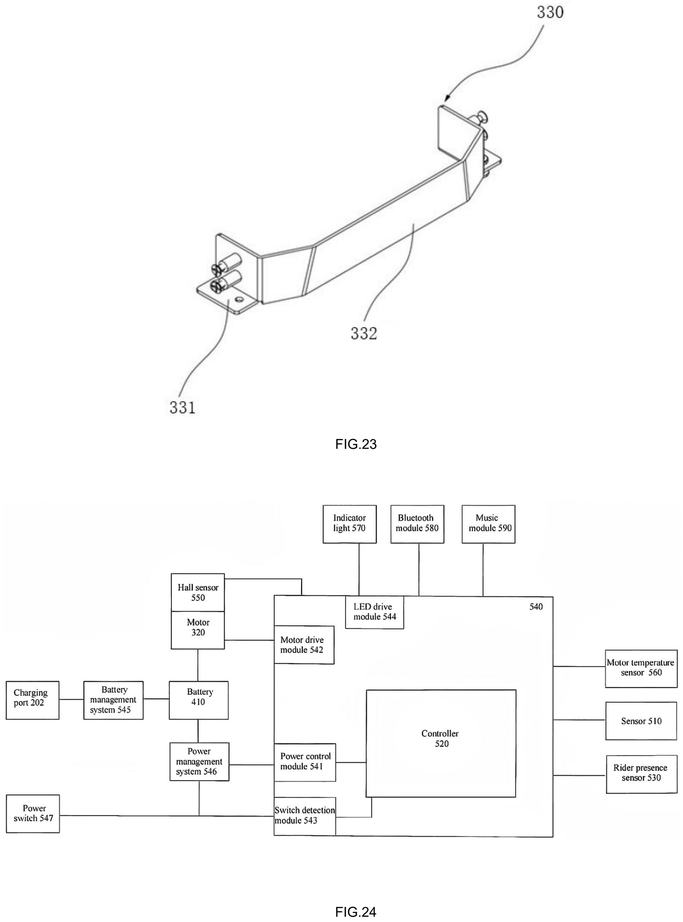

Specifically, as shown in FIGS. 21 and 23, the support plate 330 is substantially U-shaped. The support plate 330 is disposed around one side of the wheel 310, and the support plate 330 is located between the first foot platform 100 and the wheel 310. Two ends of the support plate 330 are respectively located on two sides of the vehicle and are respectively fixedly connected to the two second connecting arms 620. For example, the ends of the support plate 330 are connected to the second connecting arms 620 via screws. Fixing portions 331 are provided on portions of the support plate 330 located on the two sides of the wheel 310. The two fixing portions 331 are in one-to-one correspondence with the two Cable housings 830, and each Cable housing 830 is connected to the corresponding fixing portion 331. For example, the Cable housing 830 is fixedly connected to the fixing portion 331 via screws.

A surface of the support plate 330 facing away from the wheel 310 is a support surface 332. When the electric vehicle 10 is in the folded state, the first foot platform 100 is rotated to abut against the second foot platform 200. At this time, the first foot platform 100 is located on a side of the support plate 330 facing away from the support surface 332. When the electric vehicle 10 is in the folded state, the user can place the support surface 332 against a placement surface so that the electric vehicle 10 is in a storage state. At this time, the wheel 310, the first foot platform 100, and the second foot platform 200 are all located above the support plate 330, and the electric vehicle 10 is in a substantially upright state. Moreover, when the electric vehicle 10 is placed upright via the support plate 330, a center of gravity line of the electric vehicle 10 falls on the support plate 330 to ensure the stability of the electric vehicle 10 in the upright placement.

In this embodiment, by providing the support plate 330, firstly, it facilitates the placement and storage of the electric vehicle 10 by the user, avoiding the electric vehicle 10 being placed arbitrarily when not in use. Secondly, the electric vehicle 10 can be supported by the support plate 330, which can prevent the wheel 310 from directly contacting the placement surface, thereby avoiding the problem of the placement surface being contaminated by the unclean wheel 310 of the used electric vehicle 10.

Further, since the first foot platform 100 and the second foot platform 200 are not arranged symmetrically with respect to the support plate 330 when the electric vehicle 10 stands on a ground surface via the support plate 330, the first foot platform 100 and the second foot platform 200 are in a tilted state at this time, so that the center of gravity line of the entire electric vehicle 10 can fall on the support plate 330. For example, when the electric vehicle 10 stands on the ground via the support plate 330, an included angle between the second foot platform 200 and a normal of the support surface 332 is in a range of 3° to 7°. Preferably, when the electric vehicle 10 stands on the ground via the support plate 330, the included angle between the second foot platform 200 and the normal of the support surface 332 is 5°.

Optionally, as shown in FIGS. 1 and 3, a fender 900 is disposed around the wheel 310. A side of the first foot platform 100 facing the wheel 310 is connected with a support connection portion. The support connection portion is arranged parallel to the motor shaft 321. A side edge of the fender 900 facing the first foot platform 100 is connected to the support connection portion, so that the fender 900 and the first foot platform 100 are relatively fixed. In addition, a side of the second foot platform 200 facing the wheel 310 is also connected with a support connection portion. The fender 900 is connected to the two support connection portions on the two sides of the wheel 310 respectively, thereby further fixing the fender 900 and increasing the stability of the fixation of the fender 900.

Specifically, the fender 900 is in a substantially end-to-end connected rectangular frame shape. A hollowed-out portion in the middle is used to accommodate the wheel 310, so that the fender 900 can be arranged around the wheel 310, and the wheel 310 passes through the fender 900. The fender 900 includes two partial fender portions 910 disposed opposite to each other. One of the partial fender portions 910 is located at a position between the wheel 310 and the first foot platform 100, and the other partial fender portion 910 is located at a position between the wheel 310 and the second foot platform 200. When the electric vehicle 10 is in the unfolded state, a lower end of the partial fender portion 910 close to the first foot platform 100 is flush with the foot support surface 101 of the first foot platform 100, and an upper end thereof extends upward along a surface of the wheel 310 by a certain width. A lower end of the partial fender portion 910 close to the second foot platform 200 is flush with the foot support surface 101 of the second foot platform 200, and an upper end thereof extends upward along the surface of the wheel 310 by a certain width. By providing the fender 900, the wheel 310 can be protected by the two partial fender portions 910 located on the two sides of the wheel 310, preventing the user's feet from touching the wheel 310 during riding, which would otherwise affect the riding or cause safety hazards. Furthermore, the partial fender portions 910 can also prevent sewage from splashing directly onto the user's feet.

In one embodiment, an anti-wear member is provided at a bottom of the first foot platform 100 and a bottom of the second foot platform 200. By providing the anti-wear member, it is possible to avoid damage to the housing of the first foot platform 100 or the second foot platform 200 caused by friction when the first foot platform 100 or the second foot platform 200 comes into contact with the ground. Since electronic devices are contained within both the first foot platform 100 and the second foot platform 200, wear of the first foot platform 100 or the second foot platform 200 may result in a lack of protection for the internal electronic devices, thereby rendering the electric vehicle 10 unusable.

Optionally, the anti-wear member consists of a plurality of convex ribs perpendicular to the motor shaft 321. For example, the plurality of convex ribs are provided at bottom edges of the first foot platform 100 and the second foot platform 200.

Referring to FIG. 24, electrical components of the electric vehicle 10 further include a power control module 541, a motor drive module 542, a switch detection module 543, one or more Hall sensors 550, a battery management system 545, a power management system 546, and a motor temperature sensor 560. The controller 520, the power control module 541, the motor drive module 542, and the switch detection module 543 are all integrated on the circuit board 540. The controller 520 is electrically connected to the power control module 541, the motor drive module 542, and the switch detection module 543, respectively.

Specifically, the sensor 510 may be a 6-axis gyroscope. The 6-axis gyroscope is configured to detect orientation information of the first foot platform 100 and the second foot platform 200, and feed the orientation information of the first foot platform 100 and the second foot platform 200 back to the controller 520 in real time. It should be noted that the orientation information of the first foot platform 100 and the second foot platform 200 may include a pitch angle and a roll angle. As shown in FIGS. 1 and 6, the pitch angle refers to an angle formed between the longitudinal axis A and the horizontal ground G, which is the tilt angle C mentioned above. The roll angle refers to an angle formed between the transverse axis B and the horizontal ground G.

The controller 520 may be configured to send a signal to the motor drive module 542 to convey a signal regarding the orientation information of the first foot platform 100 and/or the second foot platform 200. The motor drive module 542 is electrically connected to the motor 320 and is capable of interpreting the signal to drive the motor 320 accordingly. The Hall sensor 550 may be disposed within the motor 320 to detect a rotation speed of the motor 320 and feed the rotation speed of the motor 320 back to the motor drive module 542 substantially instantaneously. The motor temperature sensor 560 is electrically connected to the circuit board 540. The motor temperature sensor 560 is configured to measure a temperature of the motor 320 and transmit the temperature information to the motor drive module 542. The motor drive module 542 can control the rotation speed of the motor 320 based on the measured temperature to prevent the motor 320 from overheating.

Optionally, a charging port 202 and a power switch 547 are provided on the second foot platform 200. A plug of a charger can be inserted into the charging port 202 to charge the battery 410. The battery management system 545 may be disposed between the charging port 202 and the battery 410. The battery management system 545 is configured to prevent the battery 410 from overcharging, over-discharging, or short-circuiting, so as to increase the safety of the electric vehicle 10. The power management system 546 is configured to manage the entire power system to enable reliable and efficient operation among various power-consuming components. The power management system 546 and the battery management system 545 cooperate with each other to jointly ensure the safety performance of the electric vehicle 10.

When the user rides the electric vehicle 10, a power switch 547 may be activated first. The activation of the power switch 547 can send a power-on signal to the power management system 546 and the switch detection module 543. The power management system 546 can transmit the power-on signal to the power control module 541 and the controller 520. In response to the power-on signal, the controller 520 can initialize the sensor 510 and the rider presence sensor 530.

When the rider presence sensor 530 detects that the user is suitably positioned on the electric vehicle 10, the rider presence sensor 530 may send a user presence signal to the controller 520. For example, in response to the user presence signal, the controller 520 may send orientation information of the first foot platform 100 and the second foot platform 200 measured by the sensor 510 to the motor drive module 542. When the first foot platform 100 and the second foot platform 200 are substantially parallel to the horizontal ground G, the motor drive module 542 drives the motor 320 to rotate.

When the rider presence sensor 530 detects that the user is no longer suitably positioned or present on the electric vehicle 10, the rider presence sensor 530 may send a user absence signal to the controller 520. In response to the user absence signal, the motor drive module 542 may be configured to reduce a rotation speed of the motor 320 to cause the electric vehicle 10 to stop.

In some embodiments, the electric vehicle 10 further includes a buzzer. The buzzer is configured to emit an audible signal. For example, when the electric vehicle 10 is powered on, the buzzer may be configured to issue a power-on signal to the user. When a circuit within the electric vehicle 10 detects an error, the buzzer may be configured to emit an error signal (such as a beeping sound) to the user.

In some embodiments, referring to FIG. 24, an LED drive module 544 is further integrated on the circuit board 540. An indicator light 570 is provided on the first foot platform 100 and/or the second foot platform 200. The indicator light 570 is connected to the LED drive module 544. The indicator light 570 may be configured to emit a visual signal to the user. For example, when the electric vehicle 10 accelerates, the indicator light 570 emits light of a first color. When the electric vehicle 10 decelerates, the indicator light 570 emits light of a second color. When riding at night, the indicator light 570 emits light of a third color. The first color, the second color, and the third color may be one of red, white, blue, and green.

In some embodiments, referring to FIG. 24, the electric vehicle 10 further includes a Bluetooth module 580 and a music module 590. Both the Bluetooth module 580 and the music module 590 are connected to the circuit board 540. The Bluetooth module 580 may be configured to connect with a mobile device of the user. The user can obtain information such as a current speed, mileage, and a battery level of the electric vehicle 10 through the mobile device. The music module 590 may be configured to play music when the user rides the electric vehicle 10, so as to improve a riding experience of the user.

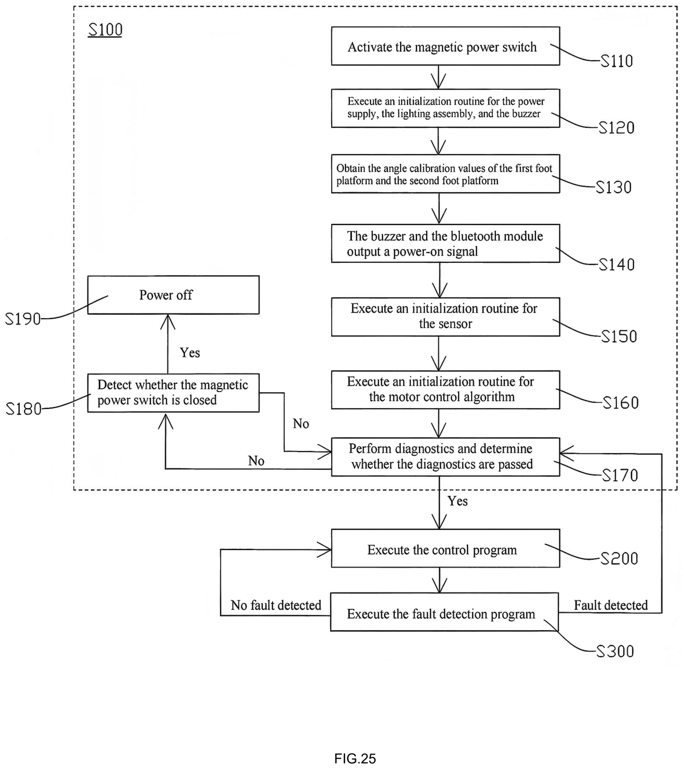

FIGS. 25 to 28 illustrate a plurality of steps executable by the electric vehicle 10, which primarily include an initialization procedure S100, a control procedure S200, and a fault detection procedure S300. In some embodiments, not all steps described below need to be performed, and in some cases, the steps may be performed in an order different from that shown.

As shown in FIG. 25, which is a flowchart of the steps of the initialization procedure S100 provided by the embodiment of the present application, the initialization procedure S100 may include steps S110 to S190. For example, in some embodiments, the steps in S110 to S190 may be performed in an order different from that shown in FIG. 25.

S110: Activate a magnetic power switch. For example, a user can toggle the power switch 547 on the second foot platform 200 to put the electric vehicle 10 in a power-on state. Exemplarily, a magnet is provided inside the electric vehicle 10, and the power switch 547 includes a reed switch. The reed switch is usually composed of two soft magnetic metal reeds sealed in a glass tube. When the electric vehicle 10 is in the unfolded state, a magnetic force of the magnet can act on the reeds of the reed switch, causing the reeds to be magnetized and attracted to each other, thereby causing the power switch 547 to conduct. When the electric vehicle 10 is folded, the magnet moves away from the reed switch so that the magnetic field disappears, thereby causing the power switch 547 to close.

S120: Execute an initialization procedure for a power source, a light assembly, and a buzzer. In this embodiment, by executing the initialization procedure for the power source, the light assembly, and the buzzer, it is ensured that the power source, the light assembly, and the buzzer are operable, thereby guaranteeing the safe and stable operation of the electric vehicle 10. In addition, the light assembly can be turned on or off by continuously pressing the rider presence sensor 530 four times.

S130: Obtain angle calibration values of the first foot platform 100 and the second foot platform 200. For example, the obtained angle calibration values include values of a pitch angle and a roll angle. The controller 520 controls the motor 320 to rotate only when both the pitch angle and the roll angle are smaller than preset angles.

S140: The buzzer and the Bluetooth module 580 emit a power-on signal. In this embodiment, the buzzer may emit a buzzing or beeping sound, and the Bluetooth module 580 may emit a voice broadcast, thereby prompting the user that the electric vehicle 10 is powered on normally.

S150: Execute an initialization procedure for the sensor 510. In this embodiment, by initializing the sensor 510, it is possible to ensure that the sensor 510 provides accurate and reliable angle data during the running of the program, thereby improving the performance and stability of the entire system.

S160: Execute an initialization procedure for a control algorithm of the motor 320. In this embodiment, by executing the initialization procedure for the control algorithm of the motor 320, it is ensured that hardware related to the control of the motor 320 is operable, thereby guaranteeing stability, precision, and safety of the motor 320 during starting and operation.

S170: Execute a diagnosis and judge whether the diagnosis is passed. That is, it is judged whether the electric vehicle 10 meets riding conditions. If the riding conditions are met, the process proceeds to the control procedure S200 and the fault detection procedure S300.

S180: Detect whether the magnetic power switch 547 is closed. If the diagnosis is not passed in step S170, the switch detection module 543 detects whether the power switch 547 is in a closed state. If it is detected that the power switch 547 is in an unclosed state, the process returns to step S170.

S190: Turn off the power. If the power switch 547 is closed, the electric vehicle 10 enters a shutdown state.

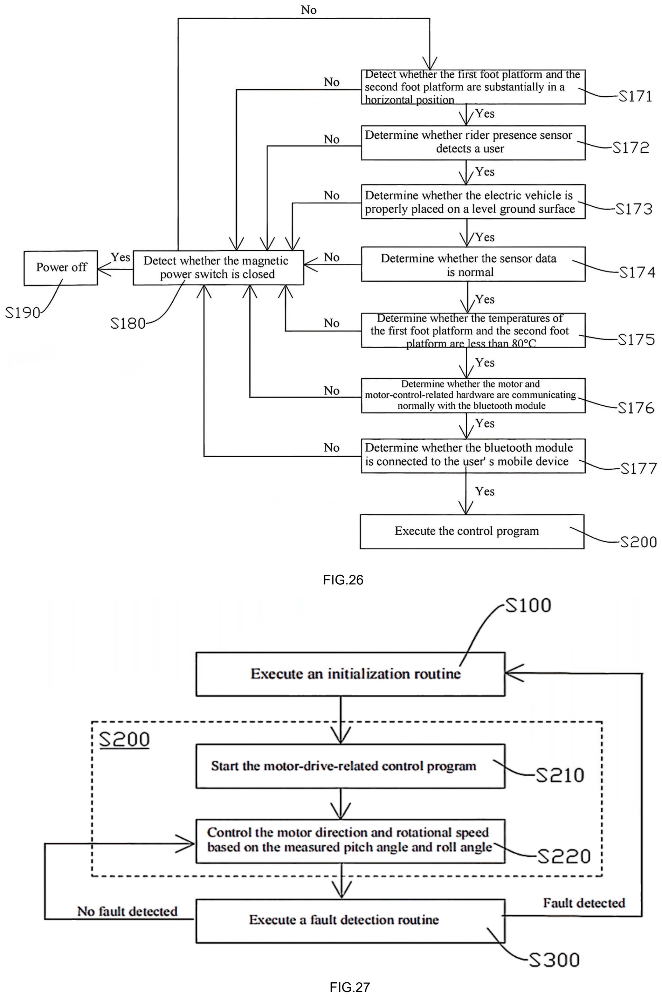

Referring to FIG. 26, in some embodiments, step S170 includes one or more steps for executing diagnosis, which may include steps S171 to S177.

S171: Detect whether the first foot platform 100 and the second foot platform 200 are substantially in a horizontal position. In this embodiment, the electric vehicle 10 can measure the pitch angle and the roll angle of the first foot platform 100 and the second foot platform 200 via the sensor 510. If the sensor 510 detects that the pitch angle is less than 2° and the roll angle is less than 20°, it can be determined that the first foot platform 100 and the second foot platform 200 are in the horizontal position, and the process proceeds to step S172. If it is determined in step S171 that the pitch angle and the roll angle are not within the above ranges, the process proceeds to step S180.

S172: Determine whether the rider presence sensor 530 detects a user. The rider presence sensor 530 can send a user presence signal and a user absence signal to the controller 520. The controller 520 can determine whether the user is suitably positioned on the electric vehicle 10. If it is determined that the user is detected as being suitably positioned on the electric vehicle 10, the process proceeds to step S173. If it is determined that the user is not suitably positioned on the electric vehicle 10, the process proceeds to step S180.

S173: Determine whether the electric vehicle 10 is correctly placed on the ground surface. That is, it is determined whether the foot support surfaces 101 of the first foot platform 100 and the second foot platform 200 are located on a side facing away from the horizontal ground G. If it is detected that the foot support surfaces 101 are located on the side facing away from the horizontal ground G, the process proceeds to step S174. If it is detected that the foot support surfaces 101 are located on a side facing the horizontal ground G, it can be determined that riding conditions are not met, and the process proceeds to step S180.

S174: Determine whether data from the sensor 510 is normal. That is, it is detected whether the current pitch angle and roll angle of the electric vehicle 10 are within preset ranges. If they are not within the preset ranges, the process proceeds to step S180.

S175: Determine whether temperatures of the first foot platform 100 and the second foot platform 200 are less than 80°C. It can be understood that a high temperature may cause damage to hardware inside the electric vehicle 10 and increase maintenance costs. If the temperatures of the first foot platform 100 and the second foot platform 200 are greater than or equal to 80°C, the process proceeds to step S180.

S176: Determine whether the motor 320 and hardware related to motor control communicate normally with the Bluetooth module 580. In this way, not only can it be ensured that communication lines inside the electric vehicle 10 are normal, but it also allows the user's mobile device to be communicatively connected with the electric vehicle 10, enabling the user to control the electric vehicle 10 via the mobile device. If the motor 320 and the hardware related to motor control do not communicate normally with the Bluetooth module 580, the process proceeds to step S180.

S177: Determine whether the Bluetooth module 580 is connected to the user's mobile device. If the Bluetooth module 580 is not communicatively connected to the user's mobile device, the process proceeds to step S180.

Referring to FIG. 27, in some embodiments, the control procedure S200 may include steps S210 to S220.

S210: Start a control program related to motor driving.

S220: Control a rotation direction and a rotation speed of the motor 320 according to the measured pitch angle and roll angle. Specifically, referring to FIGS. 6 and 7, the sensor 510 sends information regarding the measured pitch angle and roll angle to the controller 520. The controller 520 sends the information regarding the measured pitch angle and roll angle to the motor drive module 542. Based on this information, the motor drive module 542 determines how to drive the motor 320 accordingly. For example, during riding, the user maintains their center of gravity on the second foot platform 200 such that an average height of the second foot platform 200 is lower than an average height of the first foot platform 100. The motor drive module 542 then controls the rotation speed of the motor 320 in a clockwise direction D3 to increase, attempting to move the first foot platform 100 and the second foot platform 200 back to a horizontal state, thereby maintaining the electric vehicle 10 in dynamic balance. Furthermore, the larger the pitch angle, the greater the rotation speed of the motor 320; correspondingly, the smaller the pitch angle, the smaller the rotation speed of the motor 320. Therefore, the user can control the rotation speed of the motor 320 by adjusting the magnitude of the pitch angle, thereby controlling the moving speed of the electric vehicle 10.

In some embodiments, when the user maintains their center of gravity on the first foot platform 100 such that an average height of the first foot platform 100 is lower than an average height of the second foot platform 200, the motor drive module 542 drives the motor 320 to rotate in a counter-clockwise direction D4, thereby realizing a reverse function of the electric vehicle 10.

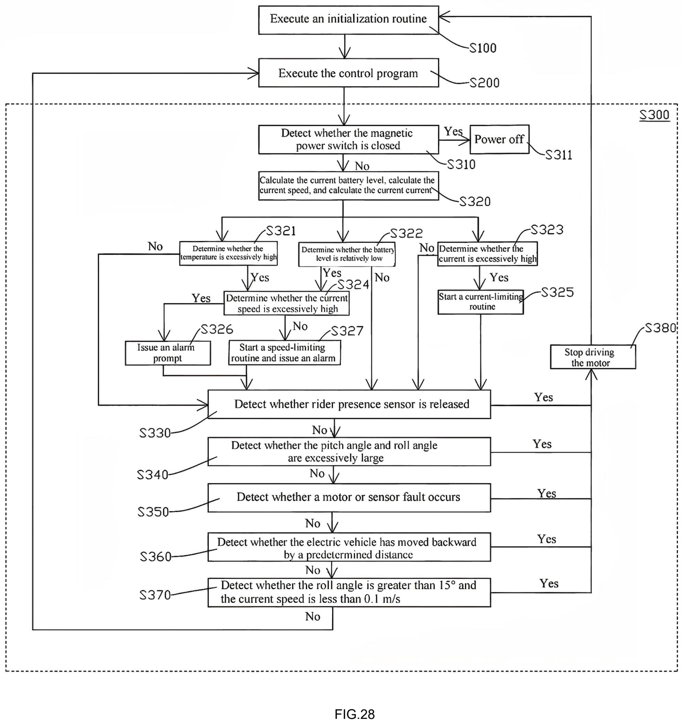

Referring to FIG. 28, in some embodiments, the fault detection procedure S300 may include steps S310 to S370. For example, in some embodiments, the steps in S310 to S370 may be performed in an order different from that shown in FIG. 28.

S310: Detect whether the magnetic power switch 547 is closed. For example, when the electric vehicle 10 has insufficient power or is in the folded state, it is determined that the power switch 547 is closed, and the process proceeds to step S311. If it is determined that the power switch 547 is not closed, the process proceeds to step S320.

S320: Calculate a current battery level, calculate a current speed, and calculate a current electrical current. The Hall sensor 550 can calculate a current rotation speed of the motor 320 to obtain the current speed of the electric vehicle 10, and feed current speed information back to the controller 520. Current battery level information and current electrical current information can be detected by other modules on the circuit board 540.

S321: Determine whether a temperature is excessively high. For example, in this embodiment, by detecting the temperature of the motor 320 or the battery 410, current temperature information of the electric vehicle 10 is obtained. If the currently measured temperature of the motor 320 is greater than 80° C., or the measured temperature of the battery 410 is greater than 60° C., the process proceeds to step S324. If the currently measured temperature of the motor 320 is less than or equal to 80° C., and the temperature of the battery 410 is less than or equal to 60° C., the process proceeds to step S330.

S322: Determine whether the battery level is relatively low. For example, when the battery level is lower than 20%, it can be determined that the battery level is relatively low. If the currently measured battery level is lower than 20%, the process proceeds to step S324. If the currently measured battery level is not lower than 20%, the process proceeds to step S330.

S323: Determine whether the electrical current is excessively large. For example, when the electrical current passing through the motor 320 exceeds 1.5 to 2 times a rated current, it can be determined that the current electrical current is excessively large. If the currently measured electrical current exceeds 1.5 to 2 times the rated current, the process proceeds to step S325 to start a current limiting procedure, thereby limiting the current passing through the motor 320 to prevent the excessively large current from causing damage to the motor 320 and the battery 410, so as to improve driving safety. If the currently measured electrical current is not within the above range, the process proceeds to step S330.

S324: Determine whether the current speed is excessively fast. For example, when the speed of the electric vehicle 10 is greater than 15 km/h, it is determined that the speed is excessively fast. If the current speed is greater than 15 km/h, the process proceeds to step S326, at which time the buzzer may emit a beeping alarm signal to prompt the user to reduce the speed, improving safety performance during use. If the current speed is less than or equal to 15 km/h, the process proceeds to step S327, at which time the controller 520 controls the motor drive module 542 to start a speed limiting procedure to reduce a maximum rotation speed of the motor 320, and simultaneously the buzzer emits an alarm signal to prompt the user that the electric vehicle 10 currently has insufficient power or a relatively high temperature.

S330: Detect whether the rider presence sensor 530 is released. If it is detected that the rider presence sensor 530 is released (e.g., the user has fallen, jumped off, or otherwise left the electric vehicle 10), the fault detection procedure S300 may proceed to step S380 for stopping driving the motor 320, and return to step S170 of the initialization procedure S100. In step S330, stopping driving the motor 320 may be implemented by locking a rotor relative to a stator, causing the wheel 310 to stop rotating about the transverse axis. For example, in step 638, the circuit board 540 may energize electrical coils of the stator with a substantially continuous, constant, and/or relatively strong current to generate a substantially constant and/or strong electromagnetic field for stopping the rotation of magnets of the rotor relative to the stator about the transverse axis.

S340: Detect whether the pitch angle and the roll angle are excessively large. For example, when the pitch angle or the roll angle is greater than 30°, it can be determined that the angle is excessively large. It can be understood that when the pitch angle or the roll angle is greater than 30°, the first foot platform 100 and the second foot platform 200 may rub against the horizontal ground G, causing a safety accident. Therefore, when the pitch angle or the roll angle is greater than 30°, the fault detection procedure S300 may proceed to step S380 for stopping driving the motor 320, and return to step S170 of the initialization procedure S100.

S350: Detect whether a fault occurs in the motor 320 or the sensor 510. When the detection module on the circuit board 540 detects that a fault occurs in the motor 320 or the sensor 510, the process may proceed to step S380 for stopping driving the motor 320, and return to step S170 of the initialization procedure S100.

S360: Detect whether the electric vehicle 10 has moved backward by a certain distance. In this embodiment, when the average height of the first foot platform 100 is higher than the average height of the second foot platform 200, it can be regarded as the electric vehicle 10 moving forward. When the average height of the first foot platform 100 is lower than the average height of the second foot platform 200, it can be regarded as the electric vehicle 10 moving backward. When the electric vehicle 10 moves backward by a certain distance, it can be determined that the user is preparing to dismount. At this time, the fault detection procedure S300 may proceed to step S380 for stopping driving the motor 320, and return to step S170 of the initialization procedure S100.

S370: Detect whether the roll angle is greater than 15° and the current vehicle speed is less than 0.1 m/s. It can be understood that when the vehicle speed is less than 0.1 m/s, the longitudinal axis B is substantially parallel to the horizontal ground G, and when the roll angle is greater than 15°, it can be determined that the user is preparing to dismount from the side. At this time, the fault detection procedure S300 may proceed to step S380 for stopping driving the motor 320, and return to step S170 of the initialization procedure S100. If the roll angle is not greater than 15° or the current vehicle speed is not less than 0.1 m/s, the fault detection procedure S300 may proceed to step S220 of the control procedure S200.

The technical features of the above-described embodiments can be combined in any arbitrary manner. For the sake of brevity, not all possible combinations of the technical features in the above embodiments are described. However, as long as there is no contradiction in the combination of these technical features, they should be considered to be within the scope of the description of this specification.

The above-described embodiments illustrate only several implementations of the present disclosure, and the description thereof is relatively specific and detailed, but should not be construed as limiting the scope of the patent. It should be pointed out that for those of ordinary skill in the art, various modifications and improvements can be made without departing from the concept of the present disclosure, and these all fall within the protection scope of the present disclosure. Therefore, the protection scope of the patent of the present disclosure shall be subject to the appended claims.

In the description of the present disclosure, it should be understood that the orientation or positional relationships indicated by terms such as "length," "width," "thickness," "center," "longitudinal," "transverse," "upper," "lower," "front," "rear," "left," "right," "vertical," "horizontal," "top," "bottom," "inner," "outer," "clockwise," "counter-clockwise," "axial," "radial," and "circumferential" are based on the orientation or positional relationships shown in the drawings. These terms are merely for the convenience of describing the present disclosure and simplifying the description, and do not indicate or imply that the device or element referred to must have a specific orientation or be constructed and operated in a specific orientation, and thus cannot be construed as a limitation on the present disclosure.

In addition, the terms "first" and "second" are used for descriptive purposes only and should not be construed as indicating or implying relative importance or implicitly indicating the number of the indicated technical features. Therefore, a feature defined with "first" or "second" may explicitly or implicitly include at least one such feature. In the description of the present disclosure, "a plurality of" means at least two, such as two, three, etc., unless otherwise expressly and specifically defined.

In the present disclosure, unless otherwise expressly specified and limited, terms such as "mounted," "connected," "coupled," and "fixed" should be interpreted broadly. For example, they may refer to a fixed connection, a detachable connection, or an integral connection; they may refer to a mechanical connection or an electrical connection; they may refer to a direct connection, an indirect connection through an intermediate medium, internal communication between two elements, or an interaction relationship between two elements, unless otherwise clearly limited. For those of ordinary skill in the art, the specific meanings of the above terms in the present disclosure can be understood according to specific situations.

In the present disclosure, unless otherwise expressly specified and limited, a first feature being "on" or "under" a second feature may mean that the first and second features are in direct contact, or that the first and second features are in indirect contact through an intermediate medium. Moreover, the first feature being "above," "over," or "on top of" the second feature may mean that the first feature is directly above or obliquely above the second feature, or simply mean that a horizontal height of the first feature is higher than that of the second feature. The first feature being "below," "under," or "underneath" the second feature may mean that the first feature is directly below or obliquely below the second feature, or simply mean that a horizontal height of the first feature is lower than that of the second feature.

It should be noted that when an element is referred to as being "disposed on," "fixed to," or "arranged on" another element, it may be directly on the other element or intervening elements may be present. When an element is considered to be "connected" to another element, it may be directly connected to the other element or intervening elements may be present simultaneously. The terms "vertical," "horizontal," "upper," "lower," "left," "right," and similar expressions used herein are for illustrative purposes only and do not represent the only implementation.

In the description of this specification, the description with reference to terms such as "one embodiment," "other embodiments," and the like means that specific features, structures, materials, or characteristics described in conjunction with the embodiment or example are included in at least one embodiment or example of the present disclosure. In this specification, the schematic representations of the above terms do not necessarily refer to the same embodiment or example. Unless otherwise defined, all technical and scientific terms used herein have the same meaning as commonly understood by those skilled in the art to which the present disclosure belongs. The terms used herein in the specification of the present disclosure are only for the purpose of describing specific embodiments and are not intended to limit the present disclosure.

## Claims

1. An electric vehicle, comprising:
a first foot platform and a second foot platform rotatably connected to the first foot platform, each of the first foot platform and the second foot platform having a foot support surface;
a wheel assembly including a wheel and a motor positioned within the wheel;
a battery assembly configured to power the electric vehicle;
at least one sensor configured to sense an orientation of at least one of the first foot platform and the second foot platform and generate an orientation signal; and
at least one controller in communication with the motor and the at least one sensor, the at least one controller being configured to control the motor based on the orientation signal to drive the wheel;
wherein the electric vehicle is configured to transition between an unfolded state and a folded state, wherein, in the unfolded state, the wheel assembly is positioned between the first foot platform and the second foot platform, and the foot support surface of the first foot platform and the foot support surface of the second foot platform are oriented to be respectively stepped on by a user's first foot and a user's second foot, and wherein, in the folded state, the first foot platform and the second foot platform are closer to each other than in the unfolded state; and
wherein, when the electric vehicle is in the unfolded state on a horizontal ground, after removal of an external force that maintains the foot support surface of the first foot platform and the foot support surface of the second foot platform substantially parallel to the horizontal ground, one of the first foot platform and the second foot platform is configured to rotate in a first direction toward the horizontal ground and the other of the first foot platform and the second foot platform is configured to rotate in a second direction opposite to the first direction away from the horizontal ground.

2. The electric vehicle of claim 1, wherein, in the unfolded state, the wheel assembly is substantially centrally positioned between the first foot platform and the second foot platform, and a longitudinal axis of at least a portion of the first foot platform is coincident with a longitudinal axis of at least a portion of the second foot platform, and in the folded state, at least a portion of the first foot platform contacts at least a portion of the second foot platform; and/or
when the electric vehicle is in the unfolded state on the horizontal ground, after removal of the external force, the first foot platform is configured to rotate in the first direction toward the horizontal ground and the second foot platform is configured to rotate in the second direction away from the horizontal ground.

3. The electric vehicle of claim 1, wherein the battery assembly is installed only in one of the first foot platform and the second foot platform.

4. The electric vehicle of claim 1, wherein, when the electric vehicle in the unfolded state is placed in a tilted orientation on the horizontal ground such that one of the first foot platform and the second foot platform is tilted and oriented to facilitate a user mounting the electric vehicle, a tilt angle of a longitudinal axis of the electric vehicle in the unfolded state relative to the horizontal ground is from 5° to 45°.

5. The electric vehicle of claim 4, wherein the tilt angle is 15°.

6. The electric vehicle of claim 1, wherein the electric vehicle further comprises two connecting arm assemblies disposed opposite each other, and a motor shaft extending from two opposite sides of the wheel, wherein each of two opposite ends of the motor shaft is detachably secured with a mounting assembly, wherein each connecting arm assembly includes a first connecting arm fixed to the first foot platform and a second connecting arm fixed to the second foot platform, wherein the second connecting arm is fixedly connected to the mounting assembly such that the second foot platform is fixed with the motor shaft, and wherein the first connecting arm is rotatably connected to the second connecting arm such that the first foot platform is rotatable relative to the second foot platform; and/or
only the second foot platform is provided with a rider presence sensor.

7. An electric vehicle, comprising:
a first foot platform and a second foot platform rotatably connected to the first foot platform, each of the first foot platform and the second foot platform having a foot support surface;
a wheel assembly including a wheel and a motor positioned within the wheel;
a battery assembly configured to power the electric vehicle;
at least one sensor configured to sense an orientation of at least one of the first foot platform and the second foot platform and generate an orientation signal; and
at least one controller in communication with the motor and the at least one sensor, the at least one controller being configured to control the motor based on the orientation signal to drive the wheel;
wherein the electric vehicle is configured to transition between an unfolded state and a folded state, wherein, in the unfolded state, the wheel assembly is positioned between the first foot platform and the second foot platform, and the foot support surface of the first foot platform and the foot support surface of the second foot platform are oriented to be respectively stepped on by a user's first foot and a user's second foot, and wherein, in the folded state, the first foot platform and the second foot platform are closer to each other than in the unfolded state; and
wherein an overall weight of the first foot platform and an overall weight of the second foot platform are different.

8. The electric vehicle of claim 8, wherein the battery assembly is installed only in one of the first foot platform and the second foot platform.

9. An electric vehicle, comprising:
a first foot platform and a second foot platform fixedly connected to each other, the first foot platform and the second foot platform being configured to be respectively stepped on by a user's first foot and a user's second foot;
a wheel assembly substantially centrally positioned between the first foot platform and the second foot platform, the wheel assembly including a wheel and a motor positioned within the wheel;
a battery assembly configured to power the electric vehicle;
at least one sensor configured to sense an orientation of at least one of the first foot platform and the second foot platform and generate an orientation signal; and
at least one controller in communication with the motor and the at least one sensor, the at least one controller being configured to control the motor based on the orientation signal to drive the wheel;
wherein an overall weight of the first foot platform and an overall weight of the second foot platform are different.

10. An electric vehicle, comprising:
a first foot platform and a second foot platform rotatably connected to the first foot platform, each of the first foot platform and the second foot platform having a foot support surface;
a wheel assembly including a wheel and a motor positioned within the wheel;
a battery assembly configured to power the electric vehicle;
at least one sensor configured to sense an orientation of at least one of the first foot platform and the second foot platform and generate an orientation signal; and
at least one controller in communication with the motor and the at least one sensor, the at least one controller being configured to control the motor based on the orientation signal to drive the wheel;
wherein the electric vehicle is configured to transition between an unfolded state and a folded state, wherein, in the unfolded state, the wheel assembly is positioned between the first foot platform and the second foot platform, and the foot support surface of the first foot platform and the foot support surface of the second foot platform are oriented to be respectively stepped on by a user's first foot and a user's second foot, and wherein, in the folded state, the first foot platform and the second foot platform are closer to each other than in the unfolded state; and
wherein, when the electric vehicle is in the unfolded state on a horizontal ground, after removal of an external force that maintains the foot support surface of the first foot platform and the foot support surface of the second foot platform substantially parallel to the horizontal ground, one of the first foot platform and the second foot platform is configured to tilt in a first direction until contacting the horizontal ground and the other of the first foot platform and the second foot platform is configured to tilt in a second direction opposite to the first direction away from the horizontal ground.
